# EUROPEAN PATENT APPLICATION

(11) **EP 3 190 818 A1**
(43) Date of publication of application: **12.07.2017**
(21) Application number: 15777245.0
(22) Date of filing: 06.03.2015
(51) Int. Cl.: H04W 16/10

(54) **RESOURCE MANAGEMENT METHOD AND RADIO ACCESS NETWORK NODE**

(30) Priority: 05.09.2014 CN 201410452801
(71) Applicant: ZTE Corporation, Shenzhen, Guangdong 518057 (CN)
(72) Inventor: SHI, Xiaojuan, Shenzhen Guangdong 518057 (CN); HUANG, Yada, Shenzhen Guangdong 518057 (CN)
(74) Representative: Awapatent AB
(86) International application number: PCT/CN2015/073821
(87) International publication number: WO 2015/154599

(57) **Abstract**

A resource management method relates to the technical field of mobile communication. The resource management method includes: a second radio access network node searching for a first radio access network node; after the first radio access network node is searched out, receiving a shared resource pattern broadcasted by the first radio access network node; and accessing to the first radio access network node over a resource of one resource pattern, and acquiring, from the first radio access network node, resource patterns for a wireless backhaul link and a radio access link respectively allocated to the second radio access network node for use.

## Description

### Technical Field

The present invention relates to the technical field of mobile communication, in particular to a resource management method and a radio access network node.

### Background

As predicted, in future 10 years, the amount of radio mobile services will increase by thousands of times. However, the current cellular radio access network based on macro cells obviously cannot provide an enough great capacity to satisfy such huge mobile service demand. At present, Ultra Dense Network (UDN) is considered by the industry as a main drive which can satisfy such huge service demand. UDN may be deployed indoor and outdoor hotspot areas or any areas in which there is a great service amount demand, e.g., densely populated residential areas, office buildings, shopping centers, stadiums, large open public places, airports, transportation hubs, etc.

UDN increases the network capacity by increasing the deployment density of network nodes, i.e., increasing the network capacity by increasing the deployment density of Radio Access Network nodes (RAN-nodes), meanwhile the dense deployment of radio access network nodes shortens the distance between a user and a radio access network node, such near-field radio communication can guarantee the high reliability of communication links on one hand and can also improve the reuse efficiency of spectrums in areas on the other hand, and thereby the network capacity can be further improved. At the same time, near-field communication between users and radio access network nodes allows millimeter waves to be usable in UDN, rich frequency resources of millimeter waves provide greater bandwidth for UDN and thereby the network capacity is further improved. Radio access network nodes are access network devices which can allow user equipment to access to a network through radio communication links. For example, NodeB (eNB), Lower Power Nodes (LPNs), Access Points (APs) and the like are all radio access network nodes.

UDN can improve the network capacity. When the network capacity is improved, the network in future does not want to increase Capital Expenditure (CAPEX) and Operating Expense (OPEX). This means that the deployment of UDN needs to decrease artificial planning, optimization and management, flexible and quick deployment can be completed in indoor and outdoor hotspot areas or areas in which there is a great service amount according to network topology, network load, service demand and the like, and self-configuration, self-optimization and self-healing can be realized. In order to realize all of these goals, the industry generally considers that UDN needs to use wireless backhaul, i.e., different from radio access network nodes of the existing network which generally access to core network devices and realize communication between radio access network nodes through wired connection (e.g., optical fibers, cables, etc.), the communication between radio access network nodes and even the access to core network devices are realized through wireless connection.

Wireless backhaul links can use frequency resources which are the same as or different from frequency resources used by radio access links, i.e., links for user equipment to access to access network devices through radio communication links, and coexistence of a great amount of wireless backhaul links and radio access links in UDN poses a challenge of how to perform resource management between links and how to solve the problem of interference between links.

### Summary

Embodiments of the present invention provide a resource management method and a radio access network node, which are used for solving the problem of interference between links when a great amount of wireless backhaul links and radio access links coexist in an ultra dense network.

In order to solve the above-mentioned problem, the embodiment of the present invention provides a resource management method, applied to an ultra dense network at least including a first radio access network node and a second radio access network node, herein the first radio access network node is provided with a wired interface and accesses to a resource coordination center through the wired interface, and the second radio access network node communicates with the first radio access network node through a wireless interface; the method includes:
the second radio access network node searching for the first radio access network node; and the second radio access network node acquiring, from the first radio access network node, a first resource pattern and a second resource pattern allocated to the second radio access network node for use, herein the first resource pattern is used for a radio access link for communication between the second radio access network node and user equipment, and the second resource pattern is used for a wireless backhaul link for communication between the second radio access network node and the first radio access network node.

In an exemplary embodiment, before the second radio access network node acquires, from the first radio access network node, two resource patterns allocated to the second radio access network node for use, the method further includes: the second radio access network node receiving a shared resource pattern broadcasted by the first radio access network node; and the second radio access network node initially accessing to the first radio access network node by using the shared resource pattern.

In an exemplary embodiment, the two resource patterns are resource patterns which are not used by other radio access network nodes in a preset range of the second radio access network node, or resource patterns which are used by other radio access network nodes in a preset range of the second radio access network node but are allowed to be shared by a plurality of radio access network nodes.

In an exemplary embodiment, the second radio access network node acquiring, from the first radio access network node, the two resource patterns allocated to the second radio access network node for use includes: the first radio access network node receiving the two resource patterns allocated by the resource coordination center to which the first radio access network node accesses, and transmitting the two resource patterns to the second radio access network node; or the first radio access network node receiving a resource pattern set allocated by the resource coordination center to which the first radio access network node accesses, selecting, from the resource pattern set, two resource patterns and transmitting the two resource patterns to the second radio access network node.

In an exemplary embodiment, the shared resource pattern is used for shared use when the second radio access network node which communicates with the first radio access network node through the wireless interface initially accesses to the first radio access network node.

In an exemplary embodiment, the second radio access network node searches for the first radio access network node by searching for a specific discovery signal of the first radio access network node; and the specific discovery signal of the first radio access network node is different from discovery signals of second radio access network nodes in the ultra dense network and is transmitted on a dedicated time domain or frequency domain resource for the first radio access network node.

In an exemplary embodiment, a resource pattern includes one of the following:
resources which are allocated on a whole system band in frequency domain but are periodically and non-continuously allocated in time domain; or
resources which are continuously allocated in time domain but are only allocated on partial bands in frequency domain; or
resources which are non-continuously allocated in time domain but are only allocated on partial bands at non-continuously allocated time periods.

In an exemplary embodiment, the second radio access network node acquiring, from the first radio access network node, the two resource patterns allocated to the second radio access network node for use includes:
the second radio access network node receiving a resource pattern set broadcasted by the first radio access network node and determining, from the resource pattern set, two resource patterns which are used by the second radio access network node.

In an exemplary embodiment, the second radio access network node receiving the resource pattern set broadcasted by the first radio access network node and determining, from the resource pattern set, the two resource patterns which are used by the second radio access network node includes:
the second radio access network node receiving a resource pattern set broadcasted by the first radio access network node, herein the resource pattern set includes resource patterns which are used for the wireless backhaul link of the second radio access network node and resource patterns which are used for the radio access link of the second radio access network node, provided to the second radio access network node for use; and the second radio access network node determining, from the resource pattern set, two resource patterns which are not used by other radio access network nodes in a preset range of the second radio access network node or two resource patterns which have already been used by other radio access network nodes in a preset range of the second radio access network node but are allowed to be shared by a plurality of radio access network nodes;
or,
the second radio access network node receiving a first resource pattern set and a second resource pattern set broadcasted by the first radio access network node, herein the first resource pattern set includes resource patterns which are provided to the second radio access network node for use and are used for the wireless backhaul link of the second radio access network node; and the second resource pattern set includes resource patterns which are provided to the second radio access network node for use and are used for the radio access link of the second radio access network node; and the second radio access network node determining, from the first pattern set, one resource pattern which is not used by radio access network nodes in a preset range of the second radio access network node or one resource pattern which has already been used by other radio access network nodes in a preset range of the second radio access network node but is allowed to be shared by a plurality of radio access network nodes, and determining, from the second pattern set, one resource pattern which is not used by other radio access network nodes in a preset range of the second radio access network node or one resource pattern which has already been used by other radio access network nodes in a preset range of the second radio access network node but is allowed to be shared by a plurality of radio access network nodes.

In an exemplary embodiment, determining a resource pattern which is not used by other radio access network nodes in the preset range of the second radio access network node or a resource pattern which has already been used by other radio access network nodes in the preset range of the second radio access network node but is allowed to be shared by a plurality of second radio access network nodes includes:
the second radio access network node monitoring broadcast of other radio access network nodes in a preset range in preset time Tm and determining a resource pattern which is used by other radio access network nodes in the preset range; and the second radio access network node selecting, from a resource pattern set broadcasted by the first radio access network node, a resource pattern which is not used by other radio access network nodes in the preset range of the second radio access network node or a resource pattern which has already been used by other radio access network nodes in the preset range of the second radio access network node but is allowed to be shared by a plurality of radio access network nodes;
or,
the first radio access network node determining a resource pattern which has already been used by the second radio access network node in a coverage range of the first radio access network node, and removing, from the broadcasted resource pattern set, the resource pattern which has already been used but is not allowed to be shared by a plurality of second radio access network nodes; and the second radio access network node selecting, from the resource pattern set broadcasted by the first radio access network node, a resource pattern.

In an exemplary embodiment, after the second radio access network node determines a resource pattern which is not used by radio access network nodes in the preset range of the second radio access network node or a resource pattern which has already been used by radio access network nodes in the preset range of the second radio access network node but is allowed to be shared by a plurality of radio access network nodes, the method further includes:
the second radio access network node broadcasting the resource pattern determined by the second radio access network node.

In an exemplary embodiment, the first radio access network node determining a resource pattern which has already been used by the second radio access network node in the coverage range of the first radio access network node includes:
the first radio access network node receiving broadcast of a plurality of second radio access network nodes in the coverage range of the first radio access network node, herein the broadcast contains resource patterns selected by the second radio access network nodes.

In an exemplary embodiment, the method further includes:
if the second radio access network node does not find, from the resource pattern set broadcasted by the first radio access network node, a resource pattern which is not used by radio access network nodes in the preset range of the second radio access network node, and does not find a resource pattern which has already been used by radio access network nodes in the preset range of the second radio access network node but is allowed to be shared by a plurality of radio access network nodes, the second radio access network node searching for other first radio access network nodes except the first radio access network node.

In an exemplary embodiment, the resource pattern set is allocated by the resource coordination center and then is transmitted to the first radio access network node.

A radio access network node includes: a wireless backhaul module and a radio access module, herein,
the wireless backhaul module is arranged to:
search for a first radio access network node; acquire, from the first radio access network node, a first resource pattern and a second resource pattern allocated to the radio access network node, i.e., a second radio access network node for use, herein the first resource pattern is used for a radio access link for communication between the second radio access network node and user equipment, and the second resource pattern is used for a wireless backhaul link for communication between the second radio access network node and the first radio access network node; and communicate with the first radio access network node by using the second resource pattern, herein the first radio access network node is provided with a wired interface and accesses to a resource coordination center through the wired interface; and the radio access function module is arranged to: communicate with user equipment by using the second resource pattern.

In an exemplary embodiment, the wireless backhaul module includes an access point search module, a broadcast receiving module and an access and configuration receiving function module; the access point search function module is arranged to: search for the first radio access network node; the broadcast receiving function module is arranged to: receive a shared resource pattern broadcasted by the first radio access network node; and the access and configuration receiving function module is arranged to: initially access to the first radio access network node by using the shared resource pattern; and acquire, from the first radio access network node, the first resource pattern and the second resource pattern allocated to the second radio access network node for use.

In an exemplary embodiment, the wireless backhaul module includes an access point search module, a broadcast receiving and transmitting module and a resource pattern function module.

The access point search module is arranged to: search for the first radio access network node; the broadcast receiving and transmitting module is arranged to: receive a resource pattern set broadcasted by the first radio access network node, herein the resource pattern set includes resource patterns which are used for the wireless backhaul link of the second radio access network node and resource patterns which are used for the radio access link of the second radio access network node, provided to the second radio access network node for use; or arranged to: receive a first resource pattern set and a second resource pattern set broadcasted by the first radio access network node, herein the first resource pattern set includes resource patterns which are provided to the second radio access network node for use and are used for the wireless backhaul link of the second radio access network node.

The second resource pattern set includes resource patterns which are provided to the second radio access network node for use and are used for the radio access link of each second radio access network node.

The resource pattern selection function module is arranged to: determine, from the resource pattern set, two resource patterns which are not used by radio access network nodes in a preset range of the second radio access network node or two resource patterns which have already been used by radio access network nodes in a preset range of the second radio access network node but are allowed to be shared by a plurality of radio access network nodes, herein one resource pattern is used for the radio access link for communication between the second radio access network node and the user equipment, and the other resource pattern is used for the wireless backhaul link for communication between the second radio access network node and the first radio access network node;
or arranged to: determine, from the first pattern set, one resource pattern which is not used by radio access network nodes in a preset range of the second radio access network node or one resource pattern which has already been used by radio access network nodes in a preset range of the second radio access network node but is allowed to be shared by a plurality of radio access network nodes, and determine, from the second pattern set, one resource pattern which is not used by radio access network nodes in a preset range of the second radio access network node or one resource pattern which has already been used by radio access network nodes in a preset range of the second radio access network node but is allowed to be shared by a plurality of radio access network nodes.

In an exemplary embodiment, the broadcast receiving and transmitting module is further arranged to: monitor broadcast of other radio access network nodes in a preset range in preset time Tm and determine a resource pattern which is used by other radio access network nodes in the preset range.

In an exemplary embodiment, the broadcast receiving and transmitting module is further arranged to: broadcast the determined resource pattern.

In an exemplary embodiment, the access point search module is further arranged to: if a resource pattern which is not used by radio access network nodes in the preset range of the second radio access network node are is found and a resource pattern which has already been used by radio access network nodes in the preset range of the second radio access network node but is allowed to be shared by a plurality of radio access network nodes is not found from the resource pattern set broadcasted by the first radio access network node, search for other first radio access network nodes except the first radio access network node.

In an exemplary embodiment, the access point search module is arranged to: search for the first radio access network node by searching for a specific discovery signal of the first radio access network node; and the specific discovery signal of the first radio access network node is different from a discovery signal of each second radio access network node in the ultra dense network where the first radio access network node is located and is transmitted on a dedicated time domain or frequency domain resource for the first radio access network node.

A radio access network node includes a wireless backhaul module and a radio access module, herein the wireless backhaul module includes a discovery signal transmitting module, a broadcast receiving and transmitting module and an available resource pattern update module.

The discovery signal transmitting module is arranged to: transmit a discovery signal of the radio access network node, i.e., a first radio access network node, herein the discovery signal is used for a second radio access network node to search for the first radio access network node.

The broadcast receiving and transmitting module is arranged to: broadcast one available resource pattern set, herein the available resource pattern set includes resource patterns which are not used by the second radio access network node in a coverage range of the first radio access network node, or resource patterns which have already been used by other radio access network nodes in a coverage range of the first radio access network node but are allowed to be shared by a plurality of radio access network nodes, are provided to the second radio access network node for use, are used for a wireless backhaul link of the second radio access network node and are used for a radio access link of the second radio access network node;
or arranged to: broadcast a first available resource pattern set and a second available resource pattern set, herein the first available resource pattern set includes resource patterns which are not used by the second radio access network node in a coverage range of the first radio access network node, or have already been used by other radio access network nodes in a coverage range of the first radio access network node but are allowed to be shared by a plurality of radio access network nodes, are provided to the second radio access network for use and are used for a wireless backhaul link of the second radio access network node; and the second available resource pattern set includes resource patterns which are not used by the second radio access network node in a coverage range of the first radio access network node or have already been used by other radio access network nodes in a coverage range of the first radio access network node but are allowed to be shared by a plurality of radio access network nodes, are provided to the second radio access network for use and are used for a radio access link of the second radio access network node.

The available resource pattern update module is arranged to: acquire, from a resource coordination center, a resource pattern set which can be allocated to and used by the first radio access network node, determine a resource pattern which has already been used by other radio access network nodes in the coverage range of the first radio access network node, remove, from the resource pattern set acquired from the resource coordination center, the resource pattern which has already been used and is not allowed to be shared by a plurality of second radio access network nodes, and generate an available resource pattern set.

The radio access module is arranged to: communicate with user equipment by using a resource pattern which is allocated by the resource coordination center and is used for a radio access link of the first radio access network node.

The wireless backhaul module is arranged to: communicate with each second radio access network node in the coverage range of the first radio access network node on a resource pattern which is determined by the second radio access network node and is used for the wireless backhaul link between the second radio access network node and the first radio access network node.

Herein the first radio access network node is provided with a wired interface and accesses to the resource coordination center through the wired interface, and the second radio access network node communicates with the first radio access network node through a wireless interface.

In an exemplary embodiment, the broadcast receiving and transmitting module is further arranged to: receive broadcast of second radio access network nodes in the coverage range of the first radio access network node, herein the broadcast contains resource patterns selected by the second radio access network nodes.

A computer-readable storage medium, storing program instructions, which, when executed, are capable of implementing the above-mentioned method.

The embodiments of the present invention enable wireless backhaul links and radio access links of radio access network nodes to coexist without causing interference, and effectively realize the resource management between all links in an ultra dense network.

### Brief Description of Drawings

FIG. 1 illustrates a schematic diagram of a network topology of a UDN access network.
FIG. 2 illustrates a schematic diagram of an interference situation 1 between wireless backhaul links and radio access links.
FIG.3 illustrates a schematic diagram of an interference situation 2 between wireless backhaul links and radio access links.
FIG. 4 illustrates a flowchart of a resource management method according to an embodiment of the present invention.
FIG. 5 illustrates a flowchart of a resource management method according to an embodiment of the present invention.
FIG. 6 illustrates a flowchart of a resource management method according to an embodiment of the present invention.
FIG. 7 illustrates an implementation flowchart of a resource management method according to embodiment one of the present invention.
FIG. 8 illustrates a schematic diagram of design of an RCCa-AP specific discovery signal according to embodiment one of the present invention.
FIG. 9 illustrates a schematic diagram of design of another RCCa-AP specific discovery signal according to embodiment one of the present invention.
FIG. 10 illustrates a schematic diagram of transmitting directions of a directional antenna according to embodiment one of the present invention.
FIG. 11 illustrates an exemplary diagram of resource patterns according to embodiment one of the present invention.
FIG. 12 illustrates a structural schematic diagram of a resource management device provided by embodiment one of the present invention.
FIG. 13 illustrates a structural schematic diagram of another resource management device provided by embodiment one of the present invention.
FIG. 14 illustrates a schematic diagram of a network topology of a UDN access network according to embodiment two and embodiment three.
FIG. 15 illustrates an implementation flowchart of a resource management method according to embodiment two of the present invention.
FIG. 16 illustrates a broadcast transmitting and receiving sequence diagram of APs according to embodiment two.
FIG. 17 illustrates a structural schematic diagram of a resource management device provided by embodiment two and embodiment three of the present invention.
FIG. 18 illustrates an implementation flowchart of a resource management method according to embodiment three of the present invention.
FIG. 19 illustrates a broadcast transmitting/receiving sequence diagram of AP1 and RCCa-AP according to embodiment three of the present invention.
FIG. 20 illustrates a structural schematic diagram of another resource management device provided by embodiment three of the present invention.

### Detailed Description

In order to enable the purposes, technical solution and advantages of the present invention to be clearer, the present invention will be alternatively described below in detail with reference to the accompanying drawings.

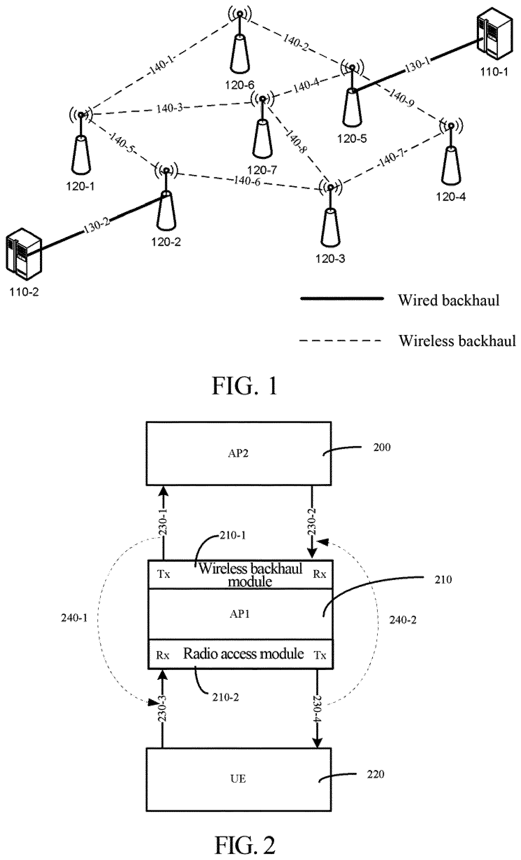

FIG. 1 illustrates a network topology structure of an exemplary access network of a UDN, herein 120-1 to 120-7 are radio access network nodes which are densely deployed in a certain area, and 110-1 and 110-2 are Resource Coordination Centers (RCCs). In order to not increase the Capital Expenditure (CAPEX) and the Operating Expense (OPEX) of UDN deployment and realize flexible and rapid deployment of UDN, in the seven radio access network nodes, 120-2 and 120-5 may respectively access to the resource coordination centers 110-2 and 110-1 through wired interfaces 130-2 and 130-1, and the seven radio access network nodes may communicate with surrounding radio access network nodes through wireless interfaces (140-1 to 140-9).

The resource coordination centers (110-1 and 110-2) as illustrated in FIG. 1 are responsible for the management and coordination of radio resources of radio access network nodes in a certain area, including resource management and coordination of radio access links and wireless backhaul links. A resource coordination center is a logical function entity. During physical implementation, the resource coordination center may be implemented on the existing access network device (e.g., a macro base station), may also be implemented by newly adding independent physical software and hardware devices, and may also be implemented on a specific resource coordination center accessible node.

The wired interfaces (130-1 and 130-2) as illustrated in FIG. 1 may use wired mediums such as copper and optical fibers to realize interfaces for connection between the resource coordination center accessible nodes and the resource coordination centers.

The wireless interfaces (140-1 to 140-9) as illustrated in FIG. 1 may use wireless air interfaces to realize wireless backhaul interfaces for communication between the resource coordination center accessible nodes.

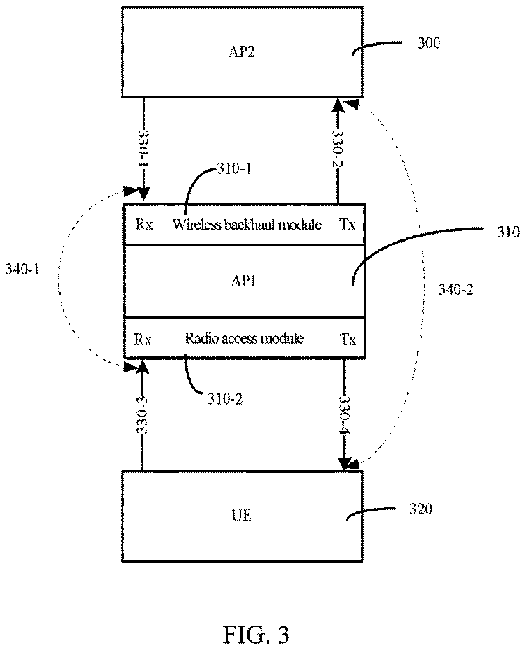

In the schematic diagram of the network topology of the UDN access network as illustrated in FIG. 1, a plurality of radio access network nodes are densely deployed in a certain area. On one hand, these radio access network nodes are provided with radio access modules and can communicate with user equipment. On the other hand, these radio access network nodes are provided with wireless backhaul modules and can communicate with other radio access network nodes. Since dense deployment is used and a radio access network node is provided with two links simultaneously, i.e., a radio access link and a wireless backhaul link, a great number of wireless backhaul links and radio access links coexist in an ultra dense network. If the wireless backhaul links and the radio access links share the same resources, inevitably interference as illustrated in FIG. 2 and FIG. 3 will be caused.

A radio access network node 210 as illustrated in FIG. 2 is provided with a radio access module 210-2 and a wireless backhaul module 210-1 simultaneously. The radio access module 210-2 receives data from User Equipment (UE) 220 through a radio access link 230-3 and transmits data to UE through a radio access link 230-4. The wireless backhaul module 210-1 transmits data to a resource coordination center accessible node 200 through a wireless backhaul link 230-1 and receives data from the resource coordination center accessible node 200 through a wireless backhaul link 230-2. The radio access links 230-3 and 230-4 may be an identical link which uses the same frequency in actual physical links. Similarly, the wireless backhaul links 230-land 230-2 may also be an identical link which uses the same frequency in actual physical links. In FIG. 2, in order to clearly describe the problem of interference, the links are thus separately expressed as different links. When the wireless backhaul links and the radio access links share the same resources, signals transmitted on the radio access link 230-4 of AP1 may interfere with signals received on the wireless backhaul link 230-2; and similarly signals transmitted on the wireless backhaul link 230-1 of AP1 may also interfere with signals received on the radio access link 230-3.

A radio access network node 310 as illustrated in FIG. 3 is provided with a radio access module 310-2 and a wireless backhaul module 310-1 simultaneously. The radio access module 310-2 receives data from User Equipment (UE) 320 through a radio access link 330-3 and transmits data to UE through a radio access link 330-4. The wireless backhaul module 310-1 transmits data to a radio access network node 300 through a wireless backhaul link 330-1 and receives data from the radio access network node 300 through a wireless backhaul link 330-2. The radio access links 330-3 and 330-4 may be an identical link which uses the same frequency in actual physical links. Similarly, the wireless backhaul links 330-1 and 330-2 may also be an identical link which uses the same frequency in actual physical links. In FIG. 3, in order to clearly describe the problem of interference, the links are thus separately expressed as different links. When the wireless backhaul links and the radio access links share the same resources, the radio access link 330-4 and the wireless backhaul link 330-2 of AP1 simultaneously transmit data, the signals transmitted by the both links may be received by a receiving end AP2 or UE and thereby interference is caused to the receiving end; and similarly, when the radio access link 330-3 of AP1 receives data from UE, the radio access link 330-3 may receive data from the wireless backhaul link 330-1 at the same time and thereby interference is caused, and vice versa, i.e., when the wireless backhaul link 330-1 of AP1 receives data from AP2, the wireless backhaul link 330-1 may receive data from the radio access link 330-3 at the same time and thereby interference is caused.

The embodiment of the present invention provides a resource management method, applied to an ultra dense network as illustrated in FIG. 1 at least including a first radio access network node and a second radio access network node, herein the first radio access network node is provided with a wired interface and accesses to a resource coordination center through the wired interface, and the second radio access network node communicates with the first radio access network node through a wireless interface; the method includes:
the second radio access network node searching for the first radio access network node;
the second radio access network node receiving a shared resource pattern broadcasted by the first radio access network node;
the second radio access network node initially accessing to the first radio access network node by using the shared resource pattern; and
the second radio access network node acquiring, from the first radio access network node, two resource patterns allocated to the second radio access network node for use,
herein one resource pattern is used for a radio access link for communication between the second radio access network node and user equipment, and the other resource pattern is used for a wireless backhaul link for communication between the second radio access network node and the first radio access network node.

In an embodiment, the two resource patterns are resource patterns which are not used by radio access network nodes in a preset range of the second radio access network node, or resource patterns which are used by radio access network nodes in a preset range of the second radio access network node but are allowed to be shared by a plurality of radio access network nodes.

In an embodiment, the second radio access network node acquiring, from the first radio access network node, the two resource patterns allocated to the second radio access network node for use includes:
the first radio access network node receiving the two resource patterns allocated by the resource coordination center to which the first radio access network node accesses, and transmitting the two resource patterns to the second radio access network node; or
the first radio access network node receiving a resource pattern set allocated by the resource coordination center to which the first radio access network node accesses, selecting, from the resource pattern set, two resource patterns and transmitting the two resource patterns to the second radio access network node.

In an embodiment, the shared resource pattern is used for shared use when the second radio access network node which communicates with the first radio access network node through the wireless interface initially accesses to the first radio access network node.

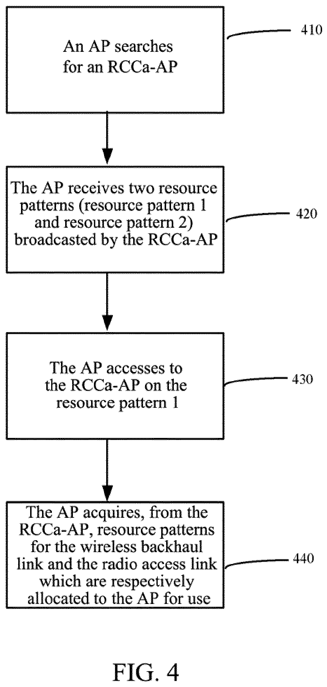

Aiming at the first resource management method provided by the embodiment of the present invention, the first resource management method will be described below in detail with reference to the flowchart illustrated in FIG. 4. As illustrated in FIG. 4, the resource management method includes the following steps.

In step 410, a second radio access network node AP (120-1, 120-3, 120-4, 120-6, 120-7) searches for a first radio access network node (resource coordination center accessible node) RCCa-AP (120-2 and 120-5) which is provided with wired interface and accesses to a resource coordination center through the wired interface.

After the AP searches out the RCCa-AP,
in step 420, the AP receives shared resource patterns, i.e., a resource pattern 1 and a resource pattern 2, broadcasted by the RCCa-AP.

The RCCa-AP has a capability of communicating with user equipment through a radio access link on one hand, and has a capability of communicating with other APs through a wireless backhaul link on the other hand, herein the resource pattern 1 is used for an initial wireless backhaul link when an AP accesses to the RCCa-AP and is shared when an AP which expects to communicate with the RCCa-AP initially accesses to the RCCa-AP; and the resource pattern 2 is used for a radio access link for the RCCa-AP and is shared by the user equipment which accesses to the RCCa-AP.

The above-mentioned two resource patterns broadcasted by the RCCa-AP are allocated by the resource Coordination Center (RCC) and then are transmitted to the RCCa-AP through the wired interface between the RCCa-AP and the RCC.

In step 430, the AP accesses to the RCCa-AP on a resource of the resource pattern 1.

After the AP successfully accesses to the RCCa-AP,
in step 440, the AP acquires, from the RCCa-AP, resource patterns for the wireless backhaul link and the radio access link which are respectively allocated to the AP for use.

Herein, the resource patterns for the wireless backhaul link and the radio access link which are allocated to the AP for use are resource patterns which are not used or have already been used but are allowed to be shared by a plurality of APs. Here, the situation that the resource patterns are used refers to that the resource patterns are used by the RCCa-AP or accessing (accessing to the RCCa-AP) APs in an area (e.g., an RCCa-AP coverage area). The allocated resource patterns are allocated by the Resource Coordination Center (RCC) and then are transmitted to the RCCa-AP through the wired interface between the RCCa-AP and the RCC, or are selected by the RCCa-AP from a resource pattern set which is allocated by the RCC and is transmitted to the RCCa-AP through the wired interface between the RCCa-AP and the RCC.

The embodiment of the present invention provides another resource management method, applied to an ultra dense network as illustrated in FIG. 1 at least including a first radio access network node and a second radio access network node, herein the first radio access network node is provided with a wired interface and accesses to a resource coordination center through the wired interface, and the second radio access network node communicates with the first radio access network node through a wireless interface; the method includes:
the second radio access network node searching for the first radio access network node;
the second radio access network node receiving a resource pattern set broadcasted by the first radio access network node, herein the resource pattern set includes resource patterns which are provided to the second radio access network node for use, are used for the wireless backhaul link of the second radio access network node and are used for the radio access link of the second radio access network node; and
the second radio access network node determining, from the resource pattern set, two resource patterns which are not used by radio access network nodes in a preset range of the second radio access network node or two resource patterns which have already been used by radio access network nodes in a preset range of the second radio access network node but are allowed to be shared by a plurality of radio access network nodes, herein one resource pattern is used for the radio access link for communication between the second radio access network node and the user equipment, and the other resource pattern is used for the wireless backhaul link for communication between the second radio access network node and the first radio access network node;
or,
the second radio access network node receiving a first resource pattern set and a second resource pattern set broadcasted by the first radio access network node, herein the first resource pattern set includes resource patterns which are provided to the second radio access network node for use and are used for the wireless backhaul link of the second radio access network node; and the second resource pattern set includes resource patterns which are provided to the second radio access network node for use and are used for the radio access link of the second radio access network node; and
the second radio access network node determining, from the first pattern set, one resource pattern which is not used by radio access network nodes in a preset range of the second radio access network node or one resource pattern which has already been used by radio access network nodes in a preset range of the second radio access network node but is allowed to be shared by a plurality of radio access network nodes, and determining, from the second pattern set, one resource pattern which is not used by radio access network nodes in a preset range of the second radio access network node or one resource pattern which has already been used by radio access network nodes in a preset range of the second radio access network node but is allowed to be shared by a plurality of radio access network nodes.

In an embodiment, determining a resource pattern which is not used by radio access network nodes in the preset range of the second radio access network node or a resource pattern which has already been used by radio access network nodes in the preset range of the second radio access network node but is allowed to be shared by a plurality of radio access network nodes includes:
the second radio access network node monitoring broadcast of other radio access network nodes in a preset range in preset time Tm and determining a resource pattern which is used by other radio access network nodes in the preset range; and
the second radio access network node selecting, from a resource pattern set broadcasted by the first radio access network node, a resource pattern which is not used by radio access network nodes in the preset range of the second radio access network node or a resource pattern which has already been used by radio access network nodes in the preset range of the second radio access network node but is allowed to be shared by a plurality of radio access network nodes;
or,
the first radio access network node determining a resource pattern which has already been used by the second radio access network node in a coverage range of the first radio access network node, and removing, from the broadcasted resource pattern set, the resource pattern which has already been used but is not allowed to be shared by a plurality of second radio access network nodes; and
the second radio access network node selecting, from the resource pattern set broadcasted by the first radio access network node, a resource pattern.

In an embodiment, after the second radio access network node determines a resource pattern which is not used by radio access network nodes in the preset range of the second radio access network node or a resource pattern which has already been used by radio access network nodes in the preset range of the second radio access network node but is allowed to be shared by a plurality of radio access network nodes, the method further includes:
the second radio access network node broadcasting the selected resource pattern.

In an embodiment, the first radio access network node determining a resource pattern which has already been used by the second radio access network node in the coverage range of the first radio access network node includes:
the first radio access network node receiving broadcast of second radio access network nodes in the coverage range of the first radio access network node, herein the broadcast contains resource patterns selected by the second radio access network nodes.

In an embodiment, the method further includes:
if the second radio access network node does not find, from the resource pattern set broadcasted by the first radio access network node, a resource pattern which is not used by radio access network nodes in the preset range of the second radio access network node, and does not find a resource pattern which has already been used by radio access network nodes in the preset range of the second radio access network node but is allowed to be shared by a plurality of radio access network nodes, the second radio access network node searching for other first radio access network nodes except the first radio access network node.

In an embodiment, the resource pattern set is allocated by the resource coordination center and then is transmitted to the first radio access network node.

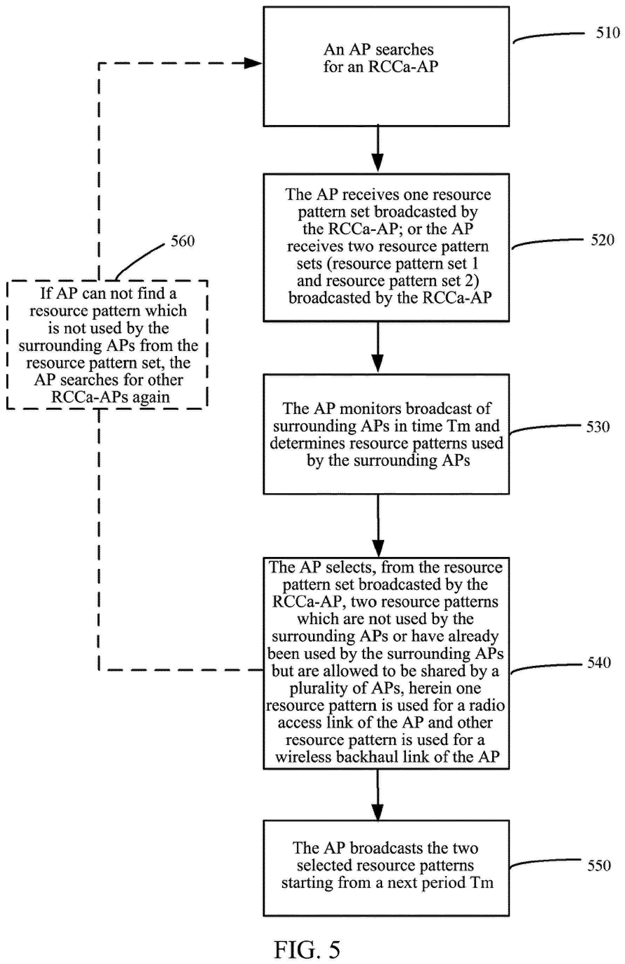

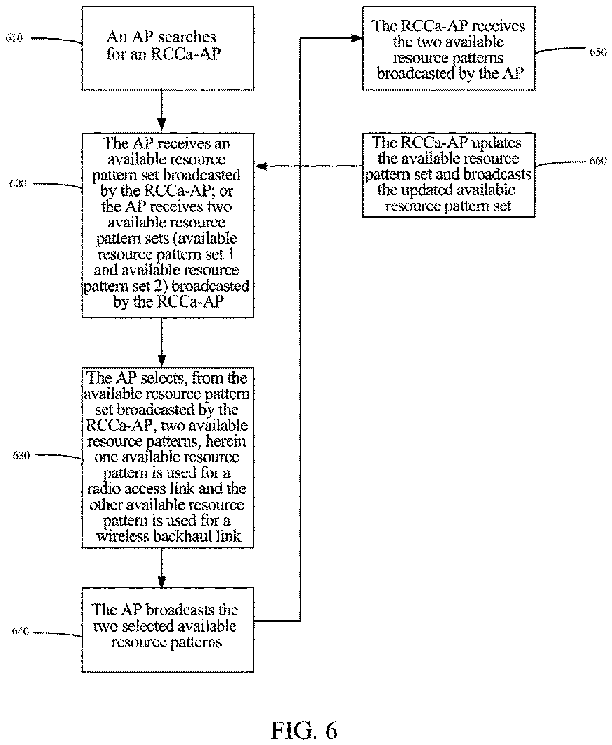

Aiming at the above-mentioned second resource management method provided by the embodiment of the present invention, the second resource management method will be described below with reference to the flowcharts illustrated in FIG. 5 and FIG. 6.

As illustrated in FIG. 5, the resource management method includes the following steps:
In step 510, an AP searches for an RCCa-AP.

After the AP searches out the RCCa-AP,
in step 520, the AP receives one resource pattern set broadcasted by the RCCa-AP, herein the resource pattern set includes resource patterns which are provided to the AP, which can access to the RCCa-AP through a wireless backhaul link, for use, are used for the wireless backhaul link of the AP and are used for the radio access link of the AP; or
the AP receives two resource pattern sets, i.e., a resource pattern set 1 and a resource pattern set 2 broadcasted by the RCCa-AP, herein the resource pattern set 1 includes resource patterns which are provided to the AP, which can access to the RCCa-AP through the wireless backhaul link, for use, and are used for the wireless backhaul link of the AP; and the resource pattern set 2 includes resource patterns which are provided to the AP, which can access to the RCCa-AP through the wireless backhaul link, for use, and are used for the radio access link of the AP.

In step 530, the AP monitors broadcast of surrounding APs in preset time Tm and determines resource patterns used by the surrounding APs, i.e., determines resource patterns for the wireless backhaul link and the resource patterns for the radio access link, which are used by APs in a preset range (here, the APs in the preset range may include surrounding APs which can be monitored by the AP or APs which are determined by other means).

Herein, Tm is a time during which the AP periodically monitors and receives broadcast of APs in the preset range, and a time length thereof is agreed by a system or is broadcasted by the RCCa-AP.

In step 540, the AP selects, from the resource pattern set broadcasted by the RCCa-AP, two resource patterns which are not used by the surrounding APs or two resource patterns which have already been used by the surrounding APs but are allowed to be shared by a plurality of APs, herein one resource pattern is used for a radio access link of the AP and other resource pattern is used for a wireless backhaul link of the AP. Here, the situation that the resource patterns are used refers to that the resource patterns are used by APs, which have accessed to the RCCa-AP, surrounding the AP.

Herein, if, in step 520, the RCCa-AP broadcasts one resource pattern set, the AP selects, from the one resource pattern set, two resource patterns which are not used by the surrounding APs or have already been used by the surrounding APs but are allowed to be shared by a plurality of APs. The situation that the two resource patterns are not used by the surrounding APs refers to that the two resource patterns are not used by the surrounding APs for the wireless backhaul link and are not used by the surrounding APs for the radio access link.

Herein, if, in step 520, the RCCa-AP broadcasts two resource pattern sets, the AP selects, from the resource pattern set 1, one resource pattern which is not used by the surrounding APs or has already been used by the surrounding APs but is allowed to be shared by a plurality of APs and is used for the wireless backhaul ink of the AP, and selects, from the resource pattern set 2, one resource pattern which is not used by the surrounding APs or has already been used by the surrounding APs but is allowed to be shared by a plurality of APs and is used for the radio access link of the AP.

In step 550, the AP broadcasts the two selected resource patterns starting from a next period Tm.

In step 560, if there is no resource pattern which is allowed to be shared by APs, the method may further include the following steps: if, in step 540, the AP cannot find a resource pattern which is not used by the surrounding APs from the resource pattern set broadcasted by the RCCa-AP, the AP searches for other RCCa-APs again.

Herein, if, in step 520, the RCCa-AP broadcasts one resource pattern set and the AP cannot find two resource patterns which are not used by the surrounding APs from the resource pattern set broadcasted by the RCCa-AP, the AP searches for other RCCa-APs again.

Herein, if, in step 520, the RCCa-AP broadcasts two resource pattern sets and the AP cannot find a resource pattern which is not used by the surrounding APs from the resource pattern set 1 or cannot find a resource pattern which is not used by the surrounding APs from the resource pattern set 2, the AP searches for other RCCa-APs again.

Step 560 is an alternative step.

FIG. 6 illustrates an improved version of the method illustrated in FIG. 5. The improved method includes the following steps.

In step 610, an AP searches for an RCCa-AP.

After the AP searches out the RCCa-AP,
in step 620, the AP receives an available resource pattern set broadcasted by the RCCa-AP, herein the available resource pattern set includes available resource patterns which are not used by accessing (accessing to the RCCa-AP) APs in an area (e.g., an RCCa-AP coverage area), or have already been used by accessing APs in the area but are allowed to be shared by a plurality of APs, are provided to the APs, which can access to the RCCa-AP through a wireless backhaul link, for use, are used for the wireless backhaul link of the APs and are used for the radio access link of the APs; or
the AP receives two available resource pattern sets, i.e., an available resource pattern set 1 and an available resource pattern set 2 broadcasted by the RCCa-AP, herein the available resource pattern set 1 includes available resource patterns which are not used by accessing (accessing to the RCCa-AP) APs in an area (e.g., an RCCa-AP coverage area), or have already been used by accessing APs in the area but are allowed to be shared by a plurality of APs, are provided to the APs, which can access to the RCCa-AP through a wireless backhaul link, for use, and are used for the wireless backhaul link of the APs; and the available resource pattern set 2 includes available resource patterns which are not used by accessing (accessing to the RCCa-AP) APs in an area (e.g., an RCCa-AP coverage area), or have already been used by accessing APs in the area but are allowed to be shared by a plurality of APs, are provided to the APs, which can access to the RCCa-AP through a wireless backhaul link, for use, and are used for the radio access link of the APs.

In step 630, the AP selects, from the available resource pattern set broadcasted by the RCCa-AP, two available resource patterns, one available resource pattern is used for a radio access link and the other available resource pattern is used for a wireless backhaul link.

Herein, if, in step 620, the RCCa-AP broadcasts two available resource pattern sets, the AP selects, from the available resource pattern set 1, an available resource pattern which is used for the wireless backhaul ink of the AP, and selects, from the available resource pattern set 2, an available resource pattern which is used for the radio access link of the AP.

In step 640, the AP broadcasts the two selected available resource patterns.

Step 640 is an alternative step, i.e., when the RCCa-AP can detect the available resource patterns which are specifically selected and used by the AP through a blind detection process of a layer 1 (physical layer), the AP may not need to broadcast the two selected available resource patterns.

In step 650, the RCCa-AP receives the two available resource patterns broadcasted by the AP.

The RCCa-AP may detect the two available resource patterns which are specifically selected and used by the AP through the blind detection process of the layer 1 (physical layer). For example, the RCCa-AP may determine the available resource patterns which are specifically selected and used by the AP through pilot signal energy detection.

In step 660, the RCCa-AP updates the available resource pattern set and broadcasts the updated available resource pattern set.

Herein, the operation that the RCCa-AP updates the available resource pattern set may refer to that the RCCa-AP deletes the two available resource patterns which are broadcasted by the AP and received in step 650 from the available resource pattern set which is broadcasted before (i.e., corresponding to step 620 that the AP receives the broadcast and the RCCa-AP broadcasts the available resource pattern set), herein, if the RCCa-AP broadcasts two available resource pattern sets before, the RCCa-AP respectively deletes one resource pattern corresponding to the two available resource pattern sets broadcasted by the AP from the two available resource pattern sets respectively; and if, in step 650, the two available resource patterns received by the RCCa-AP and broadcasted by the AP are resource patterns which are allowed to be shared by a plurality of APs, the RCCa-AP updates the available resource pattern set and may not perform the above-mentioned deletion operation.

It needs to be stated that, in step 650, the RCCa-AP receives the broadcast of the AP, the RCCa-AP receives the broadcast from the APs in the area (e.g., the RCCa-AP coverage area) in one broadcast period of the RCCa-AP, and in step 660, after the broadcast is received, the RCCa-AP broadcasts the updated available resource pattern set starting from a next broadcast period of the RCCa-AP.

In the two resource management methods provided by the embodiment of the present invention, the second radio access network node searches for the first radio access network node by searching for a specific discovery signal of the first radio access network node.

The specific discovery signal of the first radio access network node is different from discovery signals of second radio access network nodes in the ultra dense network and is transmitted on a dedicated time domain or frequency domain position for the first radio access network node.

A resource pattern includes one of the following:
resources which are allocated on a whole system band in frequency domain but are periodically and non-continuously allocated in time domain; or
resources which are continuously allocated in time domain but are only allocated on partial bands in frequency domain; or
resources which are non-continuously allocated in time domain but are only allocated on partial bands at non-continuously allocated time periods.

The embodiment of the present invention provides a resource management device, configured on a second radio access network node side, including: a wireless backhaul function and a radio access module, herein the wireless backhaul function module includes an access point search module, a broadcast receiving module and an access and configuration receiving module.

The access point search module is arranged to search for a first radio access network node.

The broadcast receiving module is arranged to receive a shared resource pattern broadcasted by the first radio access network node.

The access and configuration receiving module is arranged to initially access to the first radio access network node by using the shared resource pattern; and acquire, from the first radio access network node, two resource patterns allocated to the second radio access network node for use.

The radio access module is arranged to communicate with user equipment by using one resource pattern for a radio access link in the two resource patterns acquired by the access and configuration receiving function module.

The wireless backhaul module is arranged to communicate with the first radio access network node by using the other resource pattern for a wireless backhaul link in the two resource patterns acquired by the access and configuration receiving function module.

Herein, the first radio access network node is provided with a wired interface and accesses to a resource coordination center through the wired interface, and the second radio access network node communicates with the first radio access network node through a wireless interface.

In an embodiment, the access point search module is arranged to search for the first radio access network node by searching for a specific discovery signal of the first radio access network node.

The specific discovery signal of the first radio access network node is different from discovery signals of second radio access network nodes in an ultra dense network where the first radio access network node is located and is transmitted on a dedicated time domain or frequency domain position for the first radio access network node.

The embodiment of the present invention provides another resource management device, set on a second radio access network node side, including: a wireless backhaul module and radio access module, herein the wireless backhaul module includes an access point search module, a broadcast receiving and transmitting module and a resource pattern selection module.

The access point search module is arranged to search for a first radio access network node.

The broadcast receiving and transmitting module is arranged to receive a resource pattern set broadcasted by the first radio access network node, herein the resource pattern set includes resource patterns which are provided to the second radio access network node for use and are used for a wireless backhaul link of the second radio access network node, and resource patterns which are used for a radio access link of the second radio access network node; or arranged to receive a first resource pattern set and a second resource pattern set broadcasted by the first radio access network node, herein the first resource pattern set includes resource patterns which are provided to the second radio access network node for use and are used for the wireless backhaul link of the second radio access network node; and the second resource pattern set includes resource patterns which are provided to the second radio access network node for use and are used for the radio access link of the second radio access network node.

The resource pattern selection module is arranged to determine, from the resource pattern set, two resource patterns which are not used by radio access network nodes in a preset range of the second radio access network node or two resource patterns which have already been used by radio access network nodes in a preset range of the second radio access network node but are allowed to be shared by a plurality of radio access network nodes, herein one resource pattern is used for the radio access link for communication between the second radio access network node and user equipment, and the other resource pattern is used for the wireless backhaul link for communication between the second radio access network node and the first radio access network node; or arranged to determine, from the first pattern set, one resource pattern which is not used by radio access network nodes in a preset range of the second radio access network node or one resource pattern which has already been used by radio access network nodes in a preset range of the second radio access network node but is allowed to be shared by a plurality of radio access network nodes, and determine, from the second pattern set, one resource pattern which is not used by radio access network nodes in a preset range of the second radio access network node or one resource pattern which has already been used by radio access network nodes in a preset range of the second radio access network node but is allowed to be shared by a plurality of radio access network nodes.

The radio access module is arranged to communicate with user equipment by using one resource pattern for the radio access link determined by the resource pattern selection function module.

The wireless backhaul module is arranged to communicate with the first radio access network node by using the other resource pattern for the wireless backhaul link determined by the resource pattern selection function module.

Herein, the first radio access network node is provided with a wired interface and accesses to a resource coordination center through the wired interface, and the second radio access network node communicates with the first radio access network node through a wireless interface.

In an embodiment, the broadcast receiving and transmitting module is further arranged to monitor broadcast of other radio access network nodes in a preset range in preset time Tm and determine a resource pattern which is used by other radio access network nodes in the preset range.

In an embodiment, the broadcast receiving and transmitting module is further arranged to broadcast the determined resource pattern.

In an embodiment, the access point search module is further arranged to, if a resource pattern which is not used by radio access network nodes in the preset range of the second radio access network node is not found and a resource pattern which has already been used by radio access network nodes in the preset range of the second radio access network node but is allowed to be shared by a plurality of radio access network nodes is not found from the resource pattern set broadcasted by the first radio access network node, search for other first radio access network nodes except the first radio access network node.

In an embodiment, the access point search module is arranged to search for the first radio access network node by searching for a specific discovery signal of the first radio access network node; and
the specific discovery signal of the first radio access network node is different from a discovery signal of each second radio access network node in the ultra dense network where the first radio access network node is located and is transmitted on a dedicated time domain or frequency domain resource for the first radio access network node.

The embodiment of the present invention further provides a resource management device, configured on a first radio access network node side, including a wireless backhaul module and a radio access module, herein the wireless backhaul module includes a discovery signal transmitting module, a broadcast receiving and transmitting module and an available resource pattern update module.

The discovery signal transmitting module is arranged to transmit a discovery signal of the first radio access network node, herein the discovery signal is used for a second radio access network node to search for the first radio access network node.

The broadcast receiving and transmitting module is arranged to broadcast one available resource pattern set, herein the available resource pattern set includes resource patterns which are not used by the second radio access network node in a coverage range of the first radio access network node or have already been used by second radio access network nodes in a coverage range of the first radio access network node but are allowed to be shared by a plurality of radio access network nodes, are provided to the second radio access network node for use, are used for a wireless backhaul link of the second radio access network node and are used for a radio access link of the second radio access network node; or arranged to broadcast a first available resource pattern set and a second available resource pattern set, herein the first available resource pattern set includes resource patterns which are not used by the second radio access network node in a coverage range of the first radio access network node or have already been used by second radio access network nodes in a coverage range of the first radio access network node but are allowed to be shared by a plurality of radio access network nodes, are provided to the second radio access network for use and are used for a wireless backhaul link of the second radio access network node; and the second available resource pattern set includes resource patterns which are not used by the second radio access network node in a coverage range of the first radio access network node or have already been used by second radio access network nodes in a coverage range of the first radio access network node but are allowed to be shared by a plurality of radio access network nodes, are provided to the second radio access network for use and are used for a radio access link of the second radio access network node.

The available resource pattern update module is arranged to acquire, from a resource coordination center, a resource pattern set which can be allocated to and used by the first radio access network node, determine a resource pattern which has already been used by second radio access network nodes in the coverage range of the first radio access network node, remove, from the resource pattern set acquired from the resource coordination center, the resource pattern which has already been used and is not allowed to be shared by a plurality of second radio access network nodes, and generate an available resource pattern set.

The radio access module is arranged to communicate with user equipment by using a resource pattern which is allocated by the resource coordination center and is used for a radio access link of the first radio access network node.

The wireless backhaul module is arranged to communicate with a second radio access network node in the coverage range of the first radio access network node on a resource pattern which is determined by the second radio access network node and is used for the wireless backhaul link between the second radio access network node and the first radio access network node.

Herein the first radio access network node is provided with a wired interface and accesses to the resource coordination center through the wired interface, and the second radio access network node communicates with the first radio access network node through a wireless interface.

In an embodiment, the broadcast receiving and transmitting module is further arranged to receive broadcast of second radio access network nodes in the coverage range of the first radio access network node, herein the broadcast contains resource patterns selected by the second radio access network nodes.

### Embodiment one

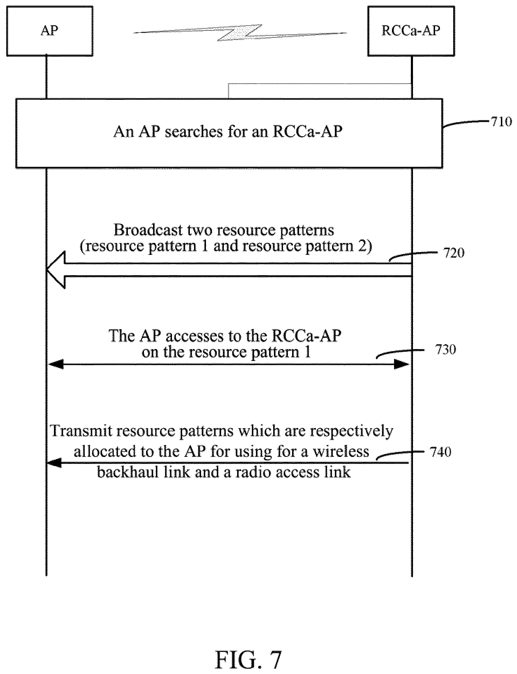

FIG. 7 illustrates a flowchart of embodiment one. Aiming at the first resource management method provided by the present invention, a specific implementation process is given and includes the following steps.

In step 710, a second radio access network node AP (120-1, 120-3, 120-4, 120-6, 120-7) searches for a first radio access network node (resource coordination center accessible node) RCCa-AP (120-2, 120-5) which is provided with wired interface and accesses to a resource coordination center through the wired interface.

As illustrated in FIG. 1, in order to not increase the CAPEX and OPEX of UDN deployment and realize flexible and rapid deployment of UDN, the number of RCCa-APs for which wired interfaces are actually deployed in a certain area for accessing to a resource coordination center should be controlled as possible, so as to satisfy actual deployment, thus satisfying the demand of access of other APs in the area through wireless interfaces. Information of the RCCa-APs in a certain area may be written into the AP in advance in an engineering mode, and the AP searches for the RCCa-AP directly according to the information which is written in advance. Such method is simple but the flexibility is not enough. In order to ensure that the AP can rapidly search for the RCCa-APs and the AP and the RCCa-APs realize flexible deployment, in this embodiment or other embodiments, a specific discovery signal of the RCCa-AP may be used, and the specific discovery signal of the RCCa-AP is different from discovery signals of other radio access network nodes APs (i.e., APs which do not access to the RCC directly through wired interfaces) and is transmitted at a time domain or frequency domain position which is specifically designed for the RCCa-AP. The AP can rapidly search for the RCCa-AP through the specific discovery signal of the RCCa-AP.

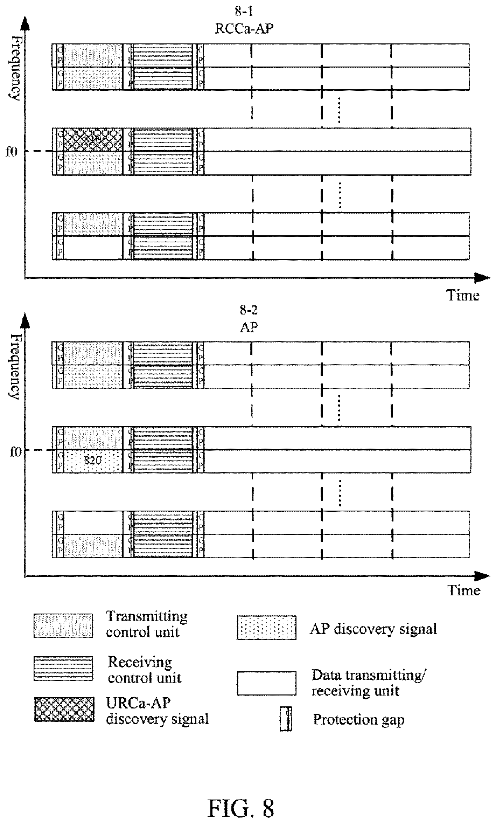

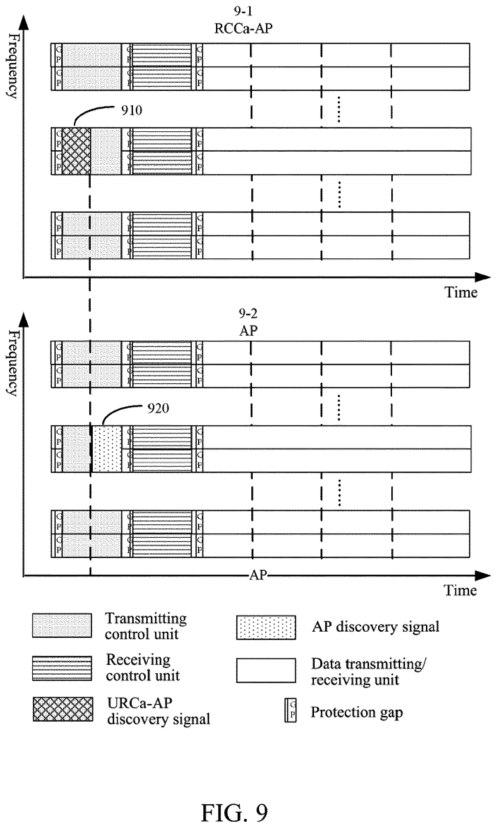

FIG. 8 and FIG. 9 respectively and exemplarily illustrate schematic diagrams of design of two RCCa-AP specific discovery signals.

In FIG. 8, f0 is a center frequency of frequencies used by an ultra dense network in a certain area. FIG. 8-1 illustrates a schematic diagram of design of a physical control channel of RCCa-AP, and FIG. 8-2 illustrates a schematic diagram of design of a physical control channel of AP. 820 represents a discovery signal of AP, while the discovery signal of RCCa-AP is located at a frequency domain position 810 which is specially designed for RCCa-AP.

Similarly, in FIG. 9, FIG. 9-1 illustrates a schematic diagram of design of a physical control channel of RCCa-AP, and FIG. 9-2 illustrates a schematic diagram of design of a physical control channel of AP. 920 represents a discovery signal of AP, while the discovery signal of RCCa-AP is located at a time domain position 910 which is specially designed for RCCa-AP.

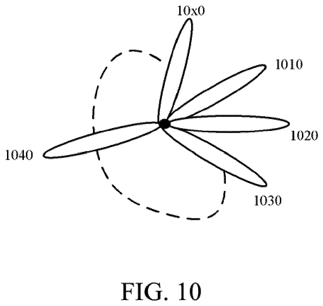

In an embodiment of the present invention, when millimeter waves are used, in order to ensure that the specific discovery signal of the RCCa-AP can be searched out by the surrounding APs in a plurality of directions, the specific discovery signal of the RCCa-AP may be transmitted serially in a plurality of directions. As illustrated in FIG. 10, the RCCa-AP sequentially transmits the discovery signal on a plurality of directions 1010, 1020, 1030...1040...10x0.

In step 720, the AP receives two resource patterns, i.e., a resource pattern 1 and a resource pattern 2 broadcasted by the RCCa-AP. Herein, the resource pattern 1 is used for a wireless backhaul link of the RCCa-AP, the AP initially accesses to the RCCa-AP on a given resource of the resource pattern 1, and the resource pattern 2 is used for a radio access link of the RCCa-AP and is provided for shared use by user equipment which access to the RCCa-AP. The two resource patterns broadcasted by the RCCa-AP are respectively used for the wireless backhaul link when the AP initially accesses to the RCCa-AP and the radio access link when user equipment under the RCCa-AP communicates with the RCCa-AP. On one hand, the interference between the radio backhaul link when the AP initially accesses to the RCCa-AP and the radio access link when the user equipment under the RCCa-AP communicates with the RCCa-AP can be solved; and on the other hand, since a shared resource pattern is allocated for a purpose that the AP initially accesses to the RCCa-AP, the interference between the wireless backhaul links between the RCCa-AP to which the AP initially accesses and the AP which has already accessed to the RCCa-AP can be avoided.

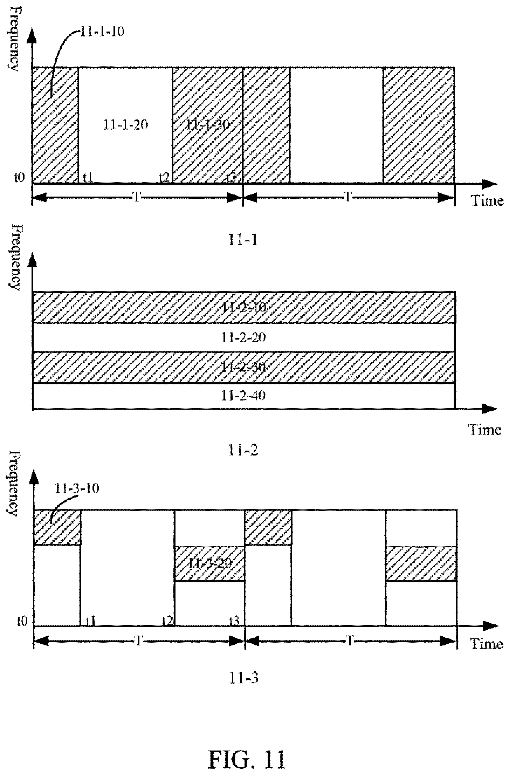

The resource pattern 1 and the resource pattern 2 are allocated by a Resource Coordination Center (RCC) and then are transmitted to the RCCa-AP through a wired interface between the RCCa-AP and the RCC. Specifically, the resource patterns may be resources which are allocated on entire system bands in frequency domain but are periodically and non-continuously allocated in time domain, may also be resources which are continuously allocated in time domain but are only allocated on partial bands in frequency domain, and may also be resources which are non-continuously allocated in time domain but are only allocated on partial bands at non-continuously allocated time periods. FIG. 11 respectively and exemplarily illustrates the above-mentioned three types of resource patterns. The resource patterns in FIG. 11 schematically represent the resource patterns 1 in this embodiment and are used for the wireless backhaul link of the RCCa-AP.

FIG. 11-1 exemplarily illustrates a resource pattern which is allocated on a whole system band in frequency domain but is periodically and non-continuously allocated in time domain. Specifically the resource pattern 1 is allocated according to a period T and includes a whole system band 11-1-10 in t0-t1 and a whole system band 11-1-30 in t2-t3 in the period T.

FIG. 11-2 exemplarily illustrates a resource pattern which is continuously allocated in time domain but is only allocated on partial bands in frequency domain. Specifically the resource pattern 1 includes two parts of band resources 11-2-10 and 11-2-30 in frequency domain which are continuously allocated in time as illustrated in the drawing.

FIG. 11-3 exemplarily illustrates a resource pattern which is non-continuously allocated in time domain but is only allocated on partial bands at non-continuously allocated time periods. Specifically the resource pattern 1 is allocated according to a period T and includes partial bands 11-3-10 in t0-t1 and partial bands 11-3-20 in t2-t3 in the period T.

In the embodiment of the present invention, when millimeter waves are used, in order to ensure that the above-mentioned two resource patterns broadcasted by the RCCa-AP can be received by the surrounding APs in a plurality of directions, as the same as the transmitting mode of the RCCa-AP discovery signal in step 710, the broadcast of the RCCa-AP may be transmitted serially in a plurality of directions.

Specifically, in a Long Term Evolution (LTE) system, the broadcast in the embodiment of the present invention may be a system message transmitted by a Radio Resource Control (RRC) layer and may also be information periodically transmitted by a newly designed Media Access Control (MAC) layer.

In step 730, the AP accesses to the RCCa-AP on a resource of the resource pattern 1.

When a plurality of APs simultaneously access to the RCCa-AP, the plurality of APs contend for the right to use the resource of the resource pattern 1 in order to access to the RCCa-AP.

In step 740, the AP receives resource patterns which are transmitted by the RCCa-AP to the AP and are allocated to the AP for using for a wireless backhaul link and a radio access link respectively.

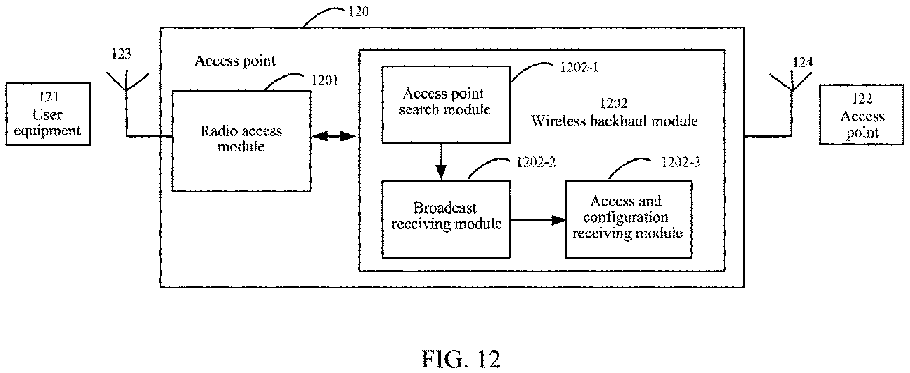

Herein, the resource patterns which are allocated by the RCCa-AP to the AP for using for the wireless backhaul link and the radio access link are resource patterns which are not used or have already been used but are allowed to be shared by a plurality of APs. Here, the situation that the resource patterns are used refers to that the resource patterns are used by the RCCa-AP or accessing (accessing to the RCCa-AP) APs in an area (e.g., RCCa-AP coverage area). The allocated resource patterns are allocated by a Resource Coordination Center (RCC) and then are transmitted to the RCCa-AP through a wired interface between the RCCa-AP and the RCC, or are selected by the RCCa-AP from a resource pattern set which is allocated by the RCC and is transmitted to the RCCa-AP through a wired interface between the RCCa-AP and the RCC. Resource patterns which are used by the AP in a certain area and are used for the wireless backhaul link and the radio access link are uniformly allocated by the RCC, or after the RCC transmits a resource pattern set available for AP to access to the RCCa-AP, the RCCa-AP uniformly allocates resource patterns used by the AP accessing to the RCCa-AP, thereby effectively avoiding the mutual interference between APs, between wireless backhaul links, between radio access links and between the wireless backhaul link and the radio access link. Corresponding to the resource management method provided by this embodiment, FIG. 12 illustrates a structural schematic diagram of the second radio access network node(access point 120). As illustrated in FIG. 12, the second radio access network node 120 includes a radio access module 1201 and a wireless backhaul module 1202.

The radio access module 1201 is connected to an antenna 123 and communicates with at least one user equipment 121 through a radio access link.

The wireless backhaul module 1202 is connected to an antenna 124 and communicates with at least one AP 122 through a wireless backhaul link, here the access point 122 especially refers to a first radio access network node (resource coordination center accessible node) RCCa-AP.

The wireless backhaul link 1202 includes three modules, including an access point search module 1202-1, a broadcast receiving module 1202-2 and an access and configuration receiving module 1202-3.

Herein, the access point search module 1202-1 searches for other access points, especially searches for the RCCa-AP. Herein, the access point search module may be preconfigured with information of the RCCa-AP, and the access point search module performs searching directly according to the configured information of the RCCa-AP, or the access point search module detects a specific discovery signal of the RCCa-AP. The access point search module may be arranged to search for the RCCa-AP in a plurality of directions.

The broadcast receiving module 1202-2 is arranged to receive the information broadcasted by the RCCa-AP searched out by the access point search module 1202-1. The received broadcast includes a resource pattern 1 and a resource pattern 2; and the broadcast receiving module may be arranged to receive broadcast information in a plurality of directions.

The access and configuration receiving module 1202-3 is arranged to access to the access point 122 on a resource of the resource pattern 1, and receive, from the access point 122, resource patterns which are configured to a wireless backhaul link and a radio access link of the access point 120.

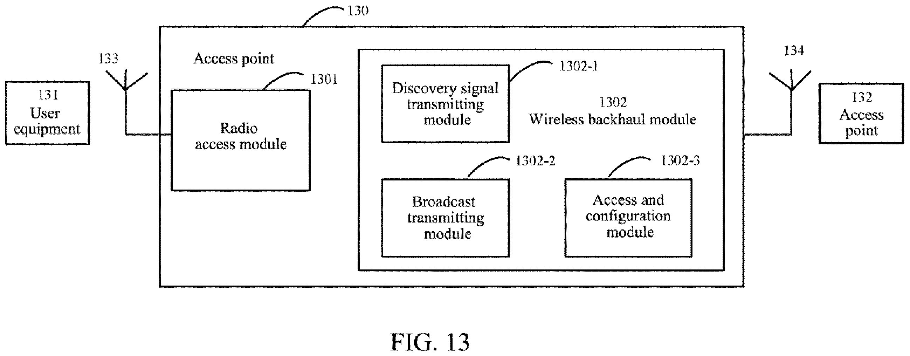

Corresponding to the resource management method provided by embodiment one, FIG. 13 illustrates a structural schematic diagram of a first radio access network node(resource coordination center accessible node RCCa-AP 130). As illustrated in FIG. 13, the access point 130 includes a radio access module 1301 and a wireless backhaul module 1302.

The radio access module 1301 is connected to an antenna 133 and communicates with at least one user equipment 131 through a radio access link.

The wireless backhaul module 1302 is connected to an antenna 134 and communicates with at least one access point 132 through a wireless backhaul link.

The wireless backhaul module 1302 is configured with three modules, including a discovery signal transmitting module 1302-1, a broadcast transmitting module 1302-2 and an access and configuration module 1302-3.

The discovery signal transmitting module 1302-1 is arranged to transmit a discovery signal of the first radio access network node 130, herein specifically the discovery signal is a specific discovery signal of an RCCa-AP, and the discovery signal transmitting function module is arranged to transmit the discovery signal in a plurality of directions.

The broadcast transmitting module 1302-2 is arranged to periodically transmit broadcast information, herein the broadcast information includes a resource pattern 1 and a resource pattern 2, and the broadcast transmitting module is arranged to transmit the discovery signal in a plurality of directions.

The access and configuration module 1302-3 is arranged to communicate with the access point 132 on a resource of the resource pattern 1, accept the access point 132 and configure a wireless backhaul link resource pattern and a radio access link resource pattern acquired from the RCC through a wired interface for the access point 132.

In actual implementation, the function modules in the resource management device provided by this embodiment may include combinations of hardware and software such as processors, memories and programs running on the processors.

### Embodiment two

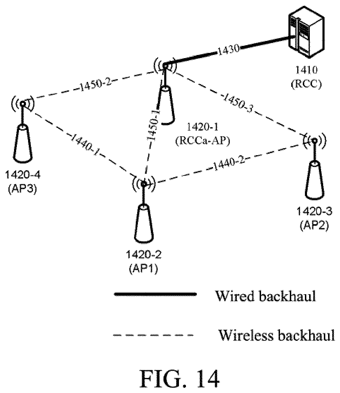

FIG. 14 illustrates a schematic diagram of a network topology of an access network according to embodiment two, by taking a scenario that four radio access network nodes are deployed in an area as an example, herein a first radio access network node 1420-1 is a resource coordination center accessible node and accesses to a resource coordination center 1410 through a wired connection 1430, there is no interface connection between other three second radio access network nodes (second radio access network nodes) 1420-2 to 1420-4 and 1410, and the three radio access network nodes at least are provided with a wireless backhaul module and may communicate with surrounding radio access network nodes. By taking the radio access network node 1420-2 (API) as an example, the AP1 may communicate with 1420-1 through a wireless backhaul link 1450-1, and may also respectively communicate with 1420-4 and 1420-3 through wireless backhaul links 1440-1 and 1440-2.

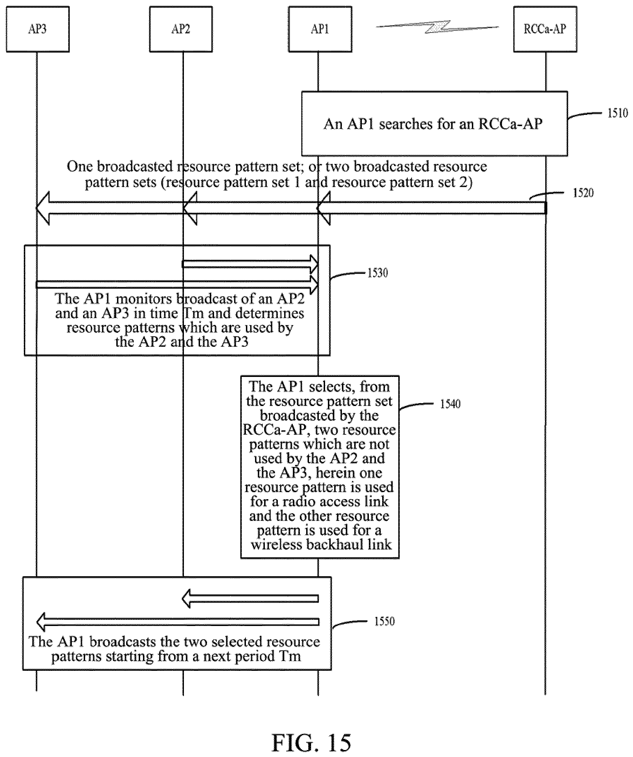

FIG. 15 illustrates an implementation flowchart of the second resource management method provided by the embodiment of the present invention by taking AP1 as an example in ultra dense network deployment in FIG. 14. The implementation process includes the following steps.

In step 1510, an AP1 searches for an RCCa-AP. A specific implementation mode that the AP1 searches for the RCCa-AP is the same as that in step 710 of embodiment one.

In step 1520, the AP1 receives a resource pattern set broadcasted by the RCCa-AP, herein the resource pattern set includes resource patterns which are provided to the APs, which can access to the RCCa-AP through the wireless backhaul link, for use, are used for the wireless backhaul link of the APs and resource patterns which are used for the radio access link of the APs.

Or, the AP1 receives two resource pattern sets, i.e., a resource pattern set 1 and a resource pattern set 2 broadcasted by the RCCa-AP, herein the resource pattern set 1 includes resource patterns which are provided to the AP, which accesses to the RCCa-AP through the wireless backhaul link, for use, and are used for the wireless backhaul link of the AP; and the resource pattern set 2 includes resource patterns which are provided to the AP, which accesses to the RCCa-AP through the wireless backhaul link, for use, and are used for the wireless backhaul link of the AP.

The resource pattern set refers to a set including a plurality of resource patterns, and is allocated by the RCC and then is transmitted to the RCCa-AP through a wired interface between the RCCa-AP and the RCC. In this embodiment, supposing that the RCCa-AP broadcasts one resource pattern set, the set includes eight resource patterns, i.e., {resource pattern 1, resource pattern 2, resource pattern 3... resource pattern 8}. The number of resource patterns included in the resource pattern set is determined by the RCC according to the number of APs accessible to RCCa-AP, current system bandwidth, resource use situation, etc.

In this embodiment, when millimeter waves are used, in order to ensure that the resource pattern set broadcasted by the RCCa-AP can be received by surrounding APs in a plurality of directions, the broadcast of the RCCa-AP may be transmitted serially in a plurality of directions.

In step 1530, the AP1 monitors broadcast of an AP2 and an AP3 in time Tm and determines resource patterns which are used by the AP2 and the AP3.

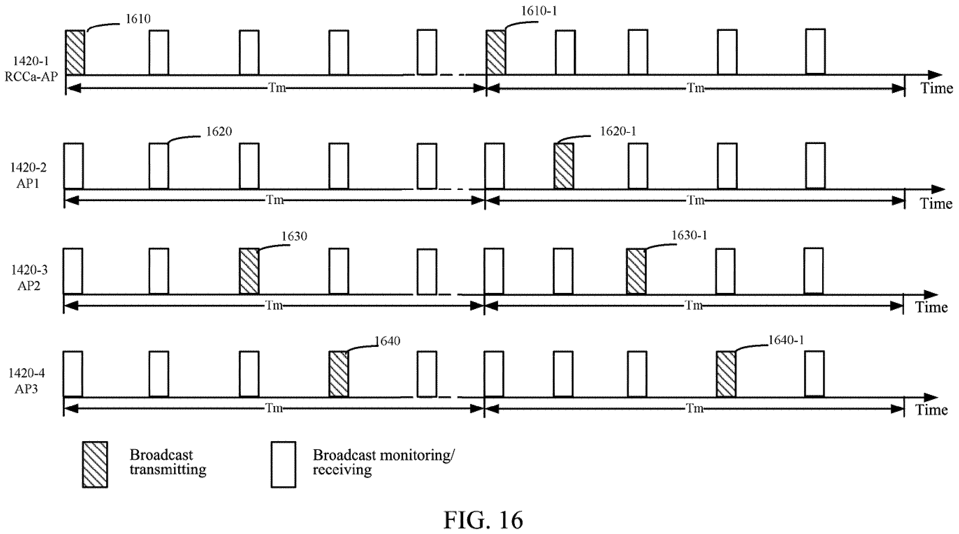

As illustrated in FIG. 16, based on the ultra dense network deployment scenario in FIG. 14, in this embodiment, five broadcast transmitting moments are set in a broadcast repetition period Tm, and the specific time length of Tm is determined according to the number of APs accessible to RCCa-AP, a time interval between adjacent broadcast transmitting moments, etc. As illustrated in FIG. 16, for the RCCa-AP (1420-1), AP2 (1420-3) and AP3 (1420-4), at broadcast transmitting moments 1610, 1630 and 1640 respectively, in the illustrated period Tm in the deployment scenario in FIG. 14, after the AP1 searches out the RCCa-AP, a resource pattern set transmitted by the RCCa-AP is received at the broadcast transmitting moment 1610, then resource patterns which are broadcasted by surrounding AP2 and AP3 and used by the AP2 and the AP3 are monitored and received at the broadcast transmitting moments 1630 and 1640 respectively during the time Tm. In this embodiment, it is supposed that the AP2 broadcasts {resource pattern 1, resource pattern 2} and the AP3 broadcasts {resource pattern 3, resource pattern 4}.

In step 1540, the AP1 selects, from the resource pattern set broadcasted by the RCCa-AP, two resource patterns which are not used by the AP2 and the AP3, herein one resource pattern is used for a radio access link and the other resource pattern is used for a wireless backhaul link. In this embodiment, resource patterns 5 to 8 in the resource pattern set are not used by the AP2 and the AP3, and the AP1 selects a resource pattern 5 and a resource pattern 6 therein. Or, if the resource pattern set broadcasted by the RCCa-AP has resource patterns which are allowed to be shared by a plurality of APs and the resource patterns which are used by the AP2 and the AP3 are exactly the resource patterns which are allowed to be shared by a plurality of APs in the resource pattern set broadcasted by the RCCa-AP, the AP1 may also select the resource patterns which have already been used by AP2 or the AP3.

The AP1 determines resource patterns which have already been used by the AP2 and the AP3 by monitoring the broadcast of the surrounding APs in the broadcast repetition period and then selects resource patterns which are not used by the surrounding APs from the resource pattern set, thereby effectively avoiding the mutual interference between the wireless backhaul links, between the radio access links and between the wireless backhaul link and the radio access link between the AP1, the AP2 and the AP3.

In step 1550, the AP1 broadcasts the resource patterns {resource pattern 5, resource pattern 6} selected by it starting from a next period Tm, herein the AP1 transmits broadcast at the broadcast transmitting moment 1620-1 which is not occupied by the AP2 and the AP3 in the next period Tm.

After the AP1 selects the resource patterns, the AP1 broadcasts the resource patterns selected by it starting from the next period Tm, such that APs which are newly enabled or newly added into the area subsequently can monitor the resource patterns which are used by the AP1, the APs which are newly enabled or newly added into the area subsequently select resource patterns which are not used by the AP1 and the mutual interference is avoided.

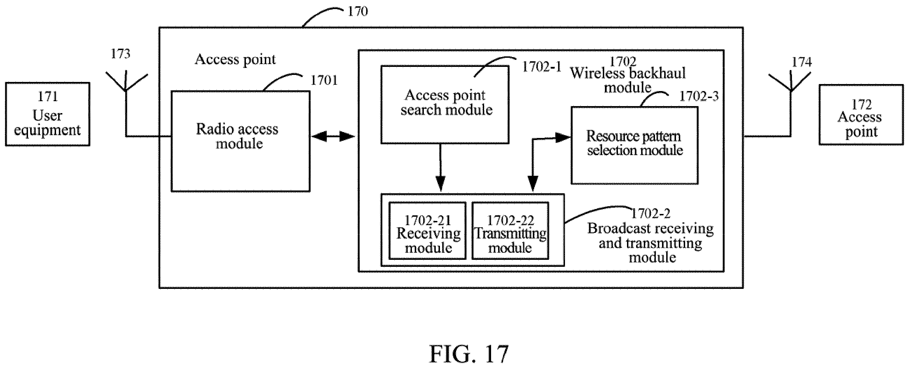

Corresponding to the resource management method provided by this embodiment, FIG. 17 illustrates a structural schematic diagram of the second radio access network node (access point 170). As illustrated in FIG. 17, the access point 170 includes a radio access module 1701 and a wireless backhaul module 1702.

The radio access module 1701 is connected to an antenna 173 and communicates with at least one user equipment 171 through a radio access link.

The wireless backhaul module 1702 is connected to an antenna 174 and communicates with at least one AP 172 through a wireless backhaul link, here the access point 172 especially refers to a first radio access network node (resource coordination center accessible node) RCCa-AP.

The wireless backhaul module1702 includes three modules, including an access point search module 1702-1, a broadcast receiving and transmitting module 1702-2 and a resource pattern selection module 1702-3.

Herein, the access point search module 1702-1 searches for other access points, especially searches for the RCCa-AP. Herein, the access point search module may be preconfigured with information of the RCCa-AP, and the access point search module performs searching directly according to the configured information of the RCCa-AP, or the access point search module detects a specific discovery signal of the RCCa-AP. The access point search function module may be arranged to search for the RCCa-AP in a plurality of directions.

The broadcast receiving and transmitting module 1702-2 includes a receiving module 1702-21 and a transmitting module 1702-22, herein the receiving module 1702-21 is arranged to receive the information which is broadcasted by the first radio access network node (resource coordination center accessible node RCCa-AP) searched out by the access point search function module 1702-1 and receive the information which is broadcasted by the surrounding APs (AP2 and AP3) in the period Tm, and transmit the received information to the resource pattern selection function module 1702-3. Herein, the broadcast information received from the RCCa-AP is resource pattern set information, and the broadcast information received from the surrounding APs is about resource patterns which are used for the wireless backhaul link and the radio access link used by the surrounding APs. The transmitting module 1702-22 is arranged to receive the selected resource patterns from the resource pattern selection function module 1702-3 and broadcast and transmit the selected resource patterns starting from a next period Tm.

The resource pattern selection module 1702-3 is arranged to select resource patterns which are not used by the surrounding APs from the resource pattern set received from the RCCa-AP, and transmit the selected resource patterns to the broadcast receiving and transmitting function module 1702-2.

### Embodiment three

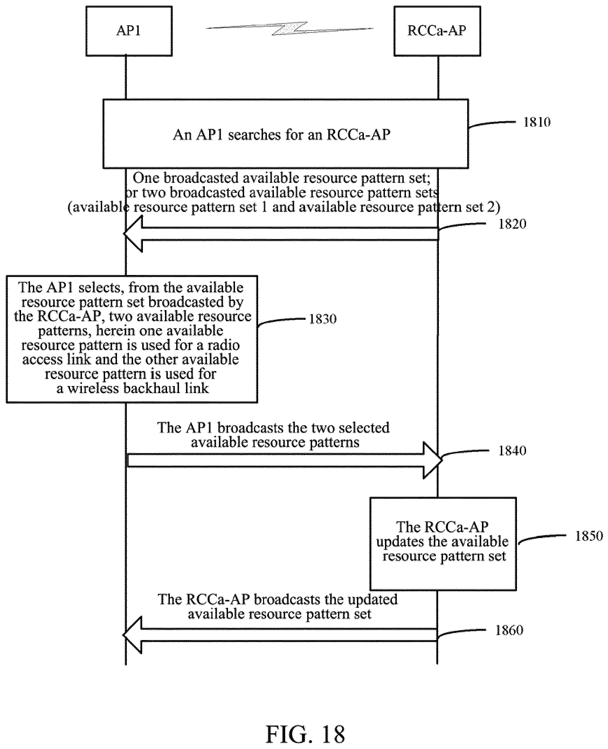

Still by taking FIG. 14 as an example, based on the ultra dense network deployment, by taking AP1 as an example, FIG. 18 illustrates an implementation flowchart of an improved method of the second resource management method provided by the embodiment of the present invention. The specific implementation process includes the following steps.

In step 1810, an AP1 searches for an RCCa-AP. A specific implementation mode for the AP1 to search for the RCCa-AP is the same as that in step 710 of embodiment one.

In step 1820, the AP1 receives an available resource pattern set broadcasted by the RCCa-AP, herein the available resource pattern set includes available resource patterns which are not used by accessing APs (e.g., accessing AP2 and AP3) in an area, or have already been used by accessing APs in the area but are allowed to be shared by a plurality of APs, are provided to the APs which can access to the RCCa-AP through a wireless backhaul link for use, are used for the wireless backhaul link of the APs and are used for the radio access link of the APs.

Or, the AP receives two available resource pattern sets, i.e., an available resource pattern set 1 and an available resource pattern set 2 broadcasted by the RCCa-AP, herein the available resource pattern set 1 includes available resource patterns which are not used by accessing APs (e.g., accessing AP2 and AP3) in an area or have already been used by accessing APs in the area but are allowed to be shared by a plurality of APs, are provided to the APs which can access to the RCCa-AP through a wireless backhaul link and are used for the wireless backhaul link of the APs; and the resource pattern set 2 includes available resource patterns which are not used by accessing APs (e.g., accessing AP2 and AP3) in an area, or have already been used by accessing APs in the area but are allowed to be shared by a plurality of APs, are provided to the APs, which can access to the RCCa-AP through a wireless backhaul link and are used for the radio access link of the APs.

The available resource pattern set includes a set of resource patterns which are not used by accessing APs in the area or have already been used by accessed APs in the area but are allowed to be shared by a plurality of APs, and a set which is formed after the RCCa-AP deletes resource patterns which have already been used by accessing APs in the area and are not allowed to be shared by a plurality of APs after the RCCa-AP receives the resource pattern set which can be allocated by the RCCa-AP for using from the RCC. The RCC determines the resource pattern set which can be allocated by the RCCa-AP for using according to number of APs accessible to the RCCa-AP, current system bandwidth, resource use situation, etc. In this embodiment, it is supposed that the RCCa-AP acquires eight resource patterns, i.e., {resource pattern 1, resource pattern 2...resource pattern 8} from the RCC, herein since resource patterns 5 to 8 have already been used by accessing AP2 and AP3, corresponding to this step, the available resource pattern set broadcasted by the RCCa-AP includes {resource pattern 1, resource pattern 2, resource pattern 3, resource pattern 4}, i.e., the available resource pattern set received by the AP1 in this step is {resource pattern 1, resource pattern 2, resource pattern 3, resource pattern 4}. Accordingly, it can be seen that, since what is broadcasted by the RCCa-AP is a set of available resource patterns, the mutual interference between the wireless backhaul links, between the radio access links and between the wireless backhaul link and the radio access link between the AP1, the AP2 and the AP3 is effectively avoided.

In this embodiment, when millimeter waves are used, in order to ensure that the available resource pattern set broadcasted by the RCCa-AP can be received by surrounding APs in a plurality of directions, the broadcast of the RCCa-AP may be transmitted serially in a plurality of directions.

In step 1830, the AP1 selects, from the available resource pattern set broadcasted by the RCCa-AP, two available resource patterns, herein one available resource pattern is used for a radio access link and the other available resource pattern is used for a wireless backhaul link. In this embodiment, the AP1 selects the resource pattern 1 and the resource pattern 2.

In step 1840, the AP1 broadcasts the two selected available resource patterns.

Step 1840 is an alternative step, i.e., when the RCCa-AP can detect the available resource patterns which are specifically selected and used by the AP1 through a blind detection process of a layer 1 (physical layer), in this step the AP1 may not need to broadcast the two selected available resource patterns.

In step 1850, after the RCCa-AP receives the broadcast of the AP1, the RCCa-AP updates the available resource pattern set.

The RCCa-AP may detect the two available resource patterns which are specifically selected and used by the AP1 through the blind detection process of the layer 1 (physical layer). For example, the RCCa-AP may determine the available resource patterns which are specifically selected and used by the AP1 through pilot signal energy detection.

In this embodiment, the updated available resource pattern set is {resource pattern 3, resource pattern 4}.

In step 1860, the RCCa-AP broadcasts the updated available resource pattern set. Specifically, the RCCa-AP broadcasts the updated available resource pattern set at a next broadcast period.

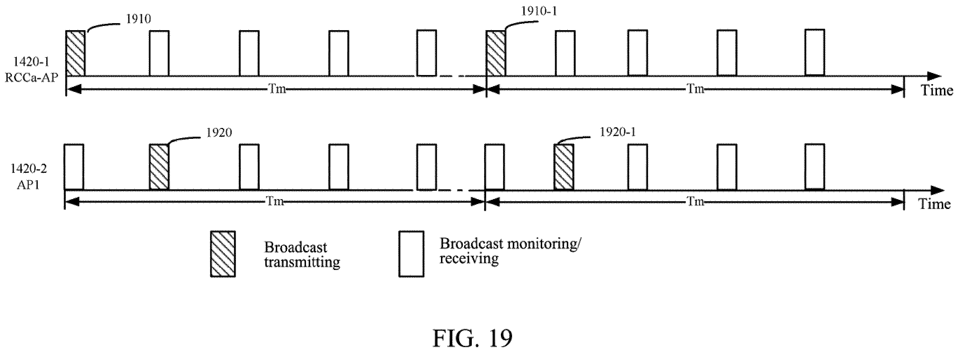

FIG. 19 illustrates a broadcast transmitting/receiving sequence diagram of the AP1 and the RCCa-AP according to this embodiment, herein Tm is broadcast repetition period, i.e., broadcast period, five broadcast transmitting moments are set in Tm, the RCCa-AP and the AP1 transmit broadcast at illustrated 1910 (1910-1) and 1920 (1920-1) respectively, in step 1810 of this embodiment, the AP1 receives the available resource pattern set {resource pattern 1, resource pattern 2, resource pattern 3, resource pattern 4} transmitted by the RCCa-AP at positions corresponding to 1910, the AP1 selects the resource pattern 1 and the resource pattern 2 therein and then broadcasts the selected resource patterns at 1920, and the RCCa-AP receives the broadcast of the AP1 at positions corresponding to 1920, updates the available resource pattern set to {resource pattern 3, resource pattern 4} and broadcasts the updated available resource pattern set starting from the broadcast moment 1910-1 of a next broadcast period of the RCCa-AP.

Corresponding to the resource management method provided by this embodiment, as illustrated in FIG. 17, a second radio access network node 170 includes a radio access module 1701 and a wireless backhaul module 1702.

The radio access module 1701 is connected to an antenna 173 and communicates with at least one user equipment 171 through a radio access link.

The wireless backhaul module 1702 is connected to an antenna 174 and communicates with at least one access point 172 through a wireless backhaul link, here the access point 172 especially refers to a first radio access network node (resource coordination center accessible node) RCCa-AP.

The wireless backhaul module 1702 includes three modules, including an access point search module 1702-1, a broadcast receiving and transmitting module 1702-2 and a resource pattern selection module 1702-3.

The access point search module 1702-1 searches for other access points, especially searches for the RCCa-AP. Herein, the access point search function module may be preconfigured with information of the RCCa-AP, and the access point search module performs searching directly according to the configured information of the RCCa-AP, or the access point search module detects a specific discovery signal of the RCCa-AP. The access point search module may be arranged to search for the RCCa-AP in a plurality of directions.

The broadcast receiving and transmitting module 1702-2 includes a receiving module 1702-21 and a transmitting module 1702-22, herein the receiving module 1702-21 is arranged to receive the information which is broadcasted by the first radio access network node (resource coordination center accessible node RCCa-AP) searched out by the access point search module 1702-1 and transmit the received information to the resource pattern selection module 1702-3. Specifically, the broadcast information received from the RCCa-AP is available resource pattern set information. The transmitting module 1702-22 is arranged to receive the selected available resource patterns from the resource pattern selection function module 1702-3 and broadcast and transmit the selected available resource patterns starting from a next broadcast period. Here, the receiving module 1702-21 is an alternative module, i.e., when the RCCa-AP has the function of detecting the available resource patterns selected and used by 1702-1 through a blind detection process of a layer 1 (physical layer), the broadcast receiving and transmitting module 1702-2 may only include the transmitting module 1702-22.

The resource pattern selection module 1702-3 is arranged to select available resource patterns from the available resource pattern set received from the RCCa-AP, and transmit the selected available resource patterns to the broadcast receiving and transmitting function module 1702-2.

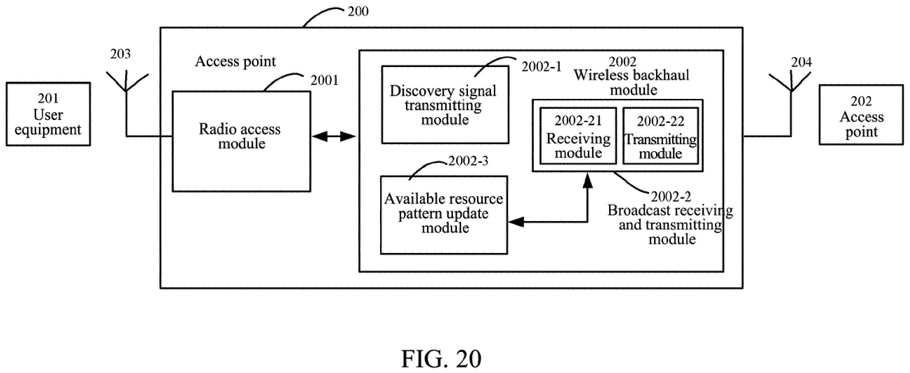

Corresponding to the resource management method provided by this embodiment, FIG. 20 illustrates a structural schematic diagram of a first radio access network node (resource coordination center accessible node RCCa-AP 200). As illustrated in FIG. 20, the first radio access network node200 includes a radio access module 2001 and a wireless backhaul module 2002.

The radio access module 2001 is connected to an antenna 203 and communicates with at least one user equipment 201 through a radio access link.

The wireless backhaul module 2002 is connected to an antenna 204 and communicates with at least one second radio access network node 202 through a wireless backhaul link.

The wireless backhaul module2002 is configured with three function modules, including a discovery signal transmitting module 2002-1, a broadcast receiving and transmitting module 2002-2 and an available resource pattern update module 2002-3.

The discovery signal transmitting module 2002-1 is arranged to transmit a discovery signal of the first radio access network node 200, particularly, the discovery signal refers to a specific discovery signal of RCCa-AP. The discovery signal transmitting module is arranged to transmit the discovery signal in a plurality of directions.

The broadcast receiving and transmitting module 2002-2 includes a receiving module 2002-21 and a transmitting module 2002-22. Herein, the receiving module 2002-21 is arranged to receive broadcast of the second radio access network node 202 which broadcasts available resource patterns selected and used by 202, and transmit the received information to the available resource pattern update module 2002-3. The transmitting module 2002-22 is arranged to acquire an available resource pattern set from 2002-3 and broadcast the available resource pattern set starting from a next broadcast period.

The available resource pattern update module 2002-3 is arranged to acquire, from an RCC, a resource pattern set which can be allocated and used by the first access point network node 200 through a wired interface, delete resource patterns which are acquired from the receiving module 2002-21 and have already been used by accessed APs in an area and are not allowed to be shared by a plurality of APs (i.e., update the available resource pattern set), e.g., resource patterns which have already been used by the second radio access network node 202 and are not allowed to be shared by a plurality of APs in FIG. 20, and transmit the updated available resource pattern set which is obtained finally to the transmitting module 2002-22.

During actual implementation, the function modules in the above-mentioned resource management device provided by this embodiment may include combinations of hardware and software such as processors, memories and programs running on the processors.

One skilled in the art can understand that all or partial steps in the above-mentioned embodiments may be implemented by using a computer program process, the computer program may be stored in a computer-readable storage medium, the computer program is executed on a corresponding hardware platform (e.g., a system, equipment, an apparatus or a device), and when being executed, it includes one or combinations of the steps of the method embodiments.

All or partial steps in the above-mentioned embodiments may also be implemented by using integrated circuits, and these steps may be respectively manufactured into integrated circuit modules, or more modules or steps thereof may be manufactured into a single integrated circuit module to implement.

Each device/function module/function unit in the above-mentioned embodiments may be implemented by using a general-purpose computer, and they may be integrated on a single computer and may also be distributed on a network consisting of a plurality of computer.

When each device/function module/function unit in the above-mentioned embodiments is implemented by means of software function module and is sold or used as an independent product, it may be stored in a computer-readable storage medium. The above-mentioned computer-readable storage medium may be a read-only memory, a magnetic disk, a compact disk or the like.

### Industrial Applicability

Embodiments of the present invention enable wireless backhaul links and radio access links of radio access network nodes to coexist without causing interference, and effectively realize the resource management between all links in an ultra dense network.

## Claims

1. A resource management method, applied to an ultra dense network at least comprising a first radio access network node and a second radio access network node, wherein the first radio access network node is provided with a wired interface and accesses to a resource coordination center through the wired interface, and the second radio access network node communicates with the first radio access network node through a wireless interface; the method comprises:
the second radio access network node searching for the first radio access network node; and
the second radio access network node acquiring, from the first radio access network node, a first resource pattern and a second resource pattern allocated to the second radio access network node for use,
wherein the first resource pattern is used for a radio access link for communication between the second radio access network node and user equipment, and the second resource pattern is used for a wireless backhaul link for communication between the second radio access network node and the first radio access network node.

2. The method according to claim 1, wherein, before the second radio access network node acquires, from the first radio access network node, two resource patterns allocated to the second radio access network node for use, the method further comprises:
the second radio access network node receiving a shared resource pattern broadcasted by the first radio access network node; and
the second radio access network node initially accessing to the first radio access network node by using the shared resource pattern.

3. The method according to claim 1, wherein the two resource patterns are resource patterns which are not used by other radio access network nodes in a preset range of the second radio access network node, or resource patterns which are used by other radio access network nodes in a preset range of the second radio access network node but are allowed to be shared by a plurality of radio access network nodes.

4. The method according to claim 1 or 2, wherein the second radio access network node acquiring, from the first radio access network node, the two resource patterns allocated to the second radio access network node for use comprises:
the first radio access network node receiving the two resource patterns allocated by the resource coordination center to which the first radio access network node accesses, and transmitting the two resource patterns to the second radio access network node; or
the first radio access network node receiving a resource pattern set allocated by the resource coordination center to which the first radio access network node accesses, selecting, from the resource pattern set, two resource patterns and transmitting the two resource patterns to the second radio access network node.

5. The method according to claim 2, wherein,
the shared resource pattern is used for shared use when the second radio access network node which communicates with the first radio access network node through the wireless interface initially accesses to the first radio access network node.

6. The method according to claim 1, wherein,
the second radio access network node searches for the first radio access network node by searching for a specific discovery signal of the first radio access network node; and
the specific discovery signal of the first radio access network node is different from discovery signals of second radio access network nodes in the ultra dense network and is transmitted on a dedicated time domain or frequency domain resource for the first radio access network node.

7. The method according to claim 1, wherein a resource pattern comprises one of the following:
Resources which are allocated on a whole system band in frequency domain but are periodically and non-continuously allocated in time domain; or
resources which are continuously allocated in time domain but are only allocated on partial bands in frequency domain; or
resources which are non-continuously allocated in time domain but are only allocated on partial bands at non-continuously allocated time periods.

8. The method according to claim 1, wherein the second radio access network node acquiring, from the first radio access network node, the two resource patterns allocated to the second radio access network node for use comprises:
the second radio access network node receiving a resource pattern set broadcasted by the first radio access network node and determining, from the resource pattern set, two resource patterns which are used by the second radio access network node.

9. The method according to claim 8, wherein the second radio access network node receiving the resource pattern set broadcasted by the first radio access network node and determining, from the resource pattern set, the two resource patterns which are used by the second radio access network node comprises:
the second radio access network node receiving a resource pattern set broadcasted by the first radio access network node, wherein the resource pattern set comprises resource patterns which are used for the wireless backhaul link of the second radio access network node and resource patterns which are used for the radio access link of the second radio access network node, provided to the second radio access network node for use; and
the second radio access network node determining, from the resource pattern set, two resource patterns which are not used by other radio access network nodes in a preset range of the second radio access network node or two resource patterns which have already been used by other radio access network nodes in a preset range of the second radio access network node but are allowed to be shared by a plurality of radio access network nodes;
or,
the second radio access network node receiving a first resource pattern set and a second resource pattern set broadcasted by the first radio access network node, wherein the first resource pattern set comprises resource patterns which are provided to the second radio access network node for use and are used for the wireless backhaul link of the second radio access network node; and the second resource pattern set comprises resource patterns which are provided to the second radio access network node for use and are used for the radio access link of each second radio access network node; and
the second radio access network node determining, from the first pattern set, one resource pattern which is not used by radio access network nodes in a preset range of the second radio access network node or one resource pattern which has already been used by other radio access network nodes in a preset range of the second radio access network node but is allowed to be shared by a plurality of radio access network nodes, and determining, from the second pattern set, one resource pattern which is not used by other radio access network nodes in a preset range of the second radio access network node or one resource pattern which has already been used by other radio access network nodes in a preset range of the second radio access network node but is allowed to be shared by a plurality of radio access network nodes.

10. The method according to claim 9, wherein determining a resource pattern which is not used by other radio access network nodes in the preset range of the second radio access network node or a resource pattern which has already been used by other radio access network nodes in the preset range of the second radio access network node but is allowed to be shared by a plurality of second radio access network nodes comprises:
the second radio access network node monitoring broadcast of other radio access network nodes in a preset range in preset time Tm and determining a resource pattern which is used by other radio access network nodes in the preset range; and
the second radio access network node selecting, from a resource pattern set broadcasted by the first radio access network node, a resource pattern which is not used by other radio access network nodes in the preset range of the second radio access network node or a resource pattern which has already been used by other radio access network nodes in the preset range of the second radio access network node but is allowed to be shared by a plurality of radio access network nodes;
or,
the first radio access network node determining a resource pattern which has already been used by the second radio access network node in a coverage range of the first radio access network node, and removing, from the broadcasted resource pattern set, the resource pattern which has already been used but is not allowed to be shared by a plurality of second radio access network nodes; and
the second radio access network node selecting, from the resource pattern set broadcasted by the first radio access network node, a resource pattern.

11. The method according to claim 10, wherein, after the second radio access network node determines a resource pattern which is not used by radio access network nodes in the preset range of the second radio access network node or a resource pattern which has already been used by radio access network nodes in the preset range of the second radio access network node but is allowed to be shared by a plurality of radio access network nodes, the method further comprises:
the second radio access network node broadcasting the resource pattern determined by the second radio access network node.

12. The method according to claim 10, wherein the first radio access network node determining a resource pattern which has already been used by the second radio access network node in the coverage range of the first radio access network node comprises:
the first radio access network node receiving broadcast of a plurality of second radio access network nodes in the coverage range of the first radio access network node, wherein the broadcast contains resource patterns selected by the second radio access network nodes.

13. The method according to claim 10, wherein the method further comprises:
if the second radio access network node does not find, from the resource pattern set broadcasted by the first radio access network node, a resource pattern which is not used by radio access network nodes in the preset range of the second radio access network node, and does not find a resource pattern which has already been used by radio access network nodes in the preset range of the second radio access network node but is allowed to be shared by a plurality of radio access network nodes, the second radio access network node searching for other first radio access network nodes except the first radio access network node.

14. The method according to claim 8, wherein,
the resource pattern set is allocated by the resource coordination center and then is transmitted to the first radio access network node.

15. A radio access network node, comprising: a wireless backhaul module and a radio access module, wherein,
the wireless backhaul module is arranged to:
search for a first radio access network node;
acquire, from the first radio access network node, a first resource pattern and a second resource pattern allocated to the radio access network node, i.e., a second radio access network node for use, wherein the first resource pattern is used for a radio access link for communication between the second radio access network node and user equipment, and the second resource pattern is used for a wireless backhaul link for communication between the second radio access network node and the first radio access network node; and
communicate with the first radio access network node by using the second resource pattern,
wherein the first radio access network node is provided with a wired interface and accesses to a resource coordination center through the wired interface; and
the radio access function module is arranged to: communicate with user equipment by using the second resource pattern.

16. The radio access network node according to claim 15, wherein,
the wireless backhaul module comprises an access point search module, a broadcast receiving module and an access and configuration receiving function module;
the access point search function module is arranged to: search for the first radio access network node;
the broadcast receiving function module is arranged to: receive a shared resource pattern broadcasted by the first radio access network node; and
the access and configuration receiving function module is arranged to: initially access to the first radio access network node by using the shared resource pattern; and acquire, from the first radio access network node, the first resource pattern and the second resource pattern allocated to the second radio access network node for use.

17. The radio access network node according to claim 15, wherein the wireless backhaul module comprises an access point search module, a broadcast receiving and transmitting module and a resource pattern function module;
the access point search module is arranged to: search for the first radio access network node;
the broadcast receiving and transmitting module is arranged to: receive a resource pattern set broadcasted by the first radio access network node, wherein the resource pattern set comprises resource patterns which are used for the wireless backhaul link of the second radio access network node, and resource patterns which are used for the radio access link of the second radio access network node, provided to the second radio access network node for use;
or arranged to: receive a first resource pattern set and a second resource pattern set broadcasted by the first radio access network node, wherein the first resource pattern set comprises resource patterns which are provided to the second radio access network node for use and are used for the wireless backhaul link of the second radio access network node; and the second resource pattern set comprises resource patterns which are provided to the second radio access network node for use and are used for the radio access link of each second radio access network node; and
the resource pattern selection function module is arranged to: determine, from the resource pattern set, two resource patterns which are not used by radio access network nodes in a preset range of the second radio access network node or two resource patterns which have already been used by radio access network nodes in a preset range of the second radio access network node but are allowed to be shared by a plurality of radio access network nodes, wherein one resource pattern is used for the radio access link for communication between the second radio access network node and the user equipment, and the other resource pattern is used for the wireless backhaul link for communication between the second radio access network node and the first radio access network node;
or arranged to: determine, from the first pattern set, one resource pattern which is not used by radio access network nodes in a preset range of the second radio access network node or one resource pattern which has already been used by radio access network nodes in a preset range of the second radio access network node but is allowed to be shared by a plurality of radio access network nodes, and determine, from the second pattern set, one resource pattern which is not used by radio access network nodes in a preset range of the second radio access network node or one resource pattern which has already been used by radio access network nodes in a preset range of the second radio access network node but is allowed to be shared by a plurality of radio access network nodes.

18. The radio access network node according to claim 17, wherein,
the broadcast receiving and transmitting module is further arranged to: monitor broadcast of other radio access network nodes in a preset range in preset time Tm and determine a resource pattern which is used by other radio access network nodes in the preset range.

19. The radio access network node according to claim 18, wherein the broadcast receiving and transmitting module is further arranged to: broadcast the determined resource pattern.

20. The radio access network node according to claim 18, wherein the access point search module is further arranged to: if a resource pattern which is not used by radio access network nodes in the preset range of the second radio access network node is not found and a resource pattern which has already been used by radio access network nodes in the preset range of the second radio access network node but is allowed to be shared by a plurality of radio access network nodes is not found from the resource pattern set broadcasted by the first radio access network node, search for other first radio access network nodes except the first radio access network node.

21. The radio access network node according to claim 16 or 17, wherein the access point search module is arranged to: search for the first radio access network node by searching for a specific discovery signal of the first radio access network node; and
the specific discovery signal of the first radio access network node is different from a discovery signal of each second radio access network node in the ultra dense network where the first radio access network node is located and is transmitted on a dedicated time domain or frequency domain resource for the first radio access network node.

22. A radio access network node, comprising a wireless backhaul module and a radio access module, wherein the wireless backhaul module comprises a discovery signal transmitting module, a broadcast receiving and transmitting module and an available resource pattern update module, wherein,
the discovery signal transmitting module is arranged to: transmit a discovery signal of the radio access network node, i.e., a first radio access network node, wherein the discovery signal is used for a second radio access network node to search for the first radio access network node;
the broadcast receiving and transmitting module is arranged to: broadcast one available resource pattern set, wherein the available resource pattern set comprises resource patterns which are not used by the second radio access network node in a coverage range of the first radio access network node, or resource patterns which have already been used by other radio access network nodes in a coverage range of the first radio access network node but are allowed to be shared by a plurality of radio access network nodes, are provided to the second radio access network node for use, are used for a wireless backhaul link of the second radio access network node and are used for a radio access link of the second radio access network node;
or arranged to: broadcast a first available resource pattern set and a second available resource pattern set, wherein the first available resource pattern set comprises resource patterns which are not used by the second radio access network node in a coverage range of the first radio access network node or have already been used by other radio access network nodes in a coverage range of the first radio access network node but are allowed to be shared by a plurality of radio access network nodes, are provided to the second radio access network for use and are used for a wireless backhaul link of the second radio access network node; and the second available resource pattern set comprises resource patterns which are not used by the second radio access network node in a coverage range of the first radio access network node or have already been used by other radio access network nodes in a coverage range of the first radio access network node but are allowed to be shared by a plurality of radio access network nodes, are provided to the second radio access network for use and are used for a radio access link of the second radio access network node; and
the available resource pattern update module is arranged to: acquire, from a resource coordination center, a resource pattern set which can be allocated to and used by the first radio access network node, determine a resource pattern which has already been used by other radio access network nodes in the coverage range of the first radio access network node, remove, from the resource pattern set acquired from the resource coordination center, the resource pattern which has already been used and is not allowed to be shared by a plurality of second radio access network nodes, and generate an available resource pattern set;
the radio access module is arranged to: communicate with user equipment by using a resource pattern which is allocated by the resource coordination center and is used for a radio access link of the first radio access network node; and
the wireless backhaul module is arranged to: communicate with each second radio access network node in the coverage range of the first radio access network node on a resource pattern which is determined by the second radio access network node and is used for the wireless backhaul link between the second radio access network node and the first radio access network node,
wherein the first radio access network node is provided with a wired interface and accesses to the resource coordination center through the wired interface, and the second radio access network node communicates with the first radio access network node through a wireless interface.

23. The radio access network node according to claim 22, wherein,
the broadcast receiving and transmitting module is further arranged to: receive broadcast of second radio access network nodes in the coverage range of the first radio access network node, wherein the broadcast contains resource patterns selected by the second radio access network nodes.

24. A computer-readable storage medium, storing program instructions, which, when executed, are capable of implementing the method according to any one of claims 1-14.
